(19)

**Europäisches Patentamt**
**European Patent Office**
**Office européen des brevets**

(11) **EP 3 291 351 A1**

(12) **EUROPEAN PATENT APPLICATION**
published in accordance with Art. 153(4) EPC

(43) Date of publication:
07.03.2018 Bulletin 2018/10

(21) Application number: 16786425.5

(22) Date of filing: 22.04.2016

(51) Int Cl.:
$H01M\ 10/0525^{(2010.01)}$      $H01M\ 4/36^{(2006.01)}$
$H01M\ 4/48^{(2010.01)}$      $H01M\ 4/485^{(2010.01)}$
$H01M\ 4/505^{(2010.01)}$      $H01M\ 4/525^{(2010.01)}$
$H01M\ 10/0566^{(2010.01)}$

(86) International application number:
PCT/JP2016/062781

(87) International publication number:
WO 2016/175148 (03.11.2016 Gazette 2016/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 28.04.2015 JP 2015091523

(71) Applicant: Kaneka Corporation
Osaka-shi, Osaka 530-8288 (JP)

(72) Inventors:
• TAKAOKA Ayumi
Settsu-shi
Osaka 566-0072 (JP)
• WAKI Akiko
Settsu-shi
Osaka 566-0072 (JP)

(74) Representative: Hoffmann Eitle
Patent- und Rechtsanwälte PartmbB
Arabellastraße 30
81925 München (DE)

(54) **PACKED OBJECT**

(57)     The present invention relates to a package with a secondary battery accommodated therein. Even when the secondary battery contains a titanium compound as negative-electrode active material, the package is capable of suppressing rate characteristics from decreasing caused by formation of gas in the secondary battery. The package is characterized by a pre-charged secondary battery accommodated in a packaging container; the secondary battery has a sealed case that encapsulates a positive electrode, nonaqueous electrolyte, negative electrode and separator; the positive electrode contains a layered rock-salt compound as positive electrode active material; the negative electrode contains a titanium compound as negative-electrode active material and faces the positive electrode with the separator disposed in between; the separator is electrically insulative and is impregnated with the nonaqueous electrolyte. The packaging container accommodates a secondary battery, and the charge rate of secondary battery in the packaging container is 30% to 60% of the full charge capacity.

FIG. 2

EP 3 291 351 A1

**Description**

Technical Field

The present invention relates to a package that accommodates a secondary battery in a packaging container.

Background Art

In recent years, research and development have been widely conducted on nonaqueous electrolyte secondary batteries used in applications such as portable devices, hybrid automobiles, electric automobiles and residential energy storage systems.

Nonaqueous electrolyte secondary batteries used in applications as above are, for example, lithium-ion secondary batteries, which are expected to exhibit high safety and a long lifetime. To satisfy the requirements, lithium-ion batteries have been developed using a titanium compound as negative-electrode active material.

CITATION LIST

PATENT LITERATURE

Patent Literature 1: JP2000-260471A
Patent Literature 2: JP2000-215884A

SUMMARY OF THE INVENTION

PROBLEMS TO BE SOLVED BY THE INVENTION

To build larger-size power storage systems, secondary batteries used in residential power storage systems are often manufactured in multiple production facilities. When transported among multiple facilities, secondary batteries are packaged at one factory and shipped to another factory or the like. To prevent deterioration caused by self-discharge, a secondary battery is usually charged in advance and shipped from a factory or the like as a package by being accommodated in a packaging container such as a cardboard box. The package is seldom shipped immediately. There is often a time lag between packaging and shipping the secondary battery, during which time the package is stored in a warehouse or the like of the shipper.

When a lithium-ion secondary battery, formed using a titanium compound as negative-electrode active material, is charged and stored for a long time, its electrolyte may decompose due to chemical reactions that occur between abnormal active sites of the titanium compound and the electrolyte. When decomposed, the electrolyte generates gases such as hydrogen gas inside the secondary battery. When a packaged secondary battery is shipped to another factory or the like and unpacked there to use the secondary battery, formation of such gases in the secondary battery may cause the rate characteristics of the secondary battery to be lower at the destination than at the factory of origin.

Accordingly, the objective of the present invention is to provide a package that accommodates a secondary battery, which is capable of suppressing rate characteristics from decreasing caused by gases formed therein even when a titanium compound is contained as its negative-electrode active material.

SOLUTIONS TO THE PROBLEMS

The inventors of the present invention have carried out intense research and found the following: even if a titanium compound is used as negative-electrode active material, when both (1) and (2) below are satisfied at the same time, a secondary battery set for a shipment phase (packaged phase) exhibits effects of significantly reducing the amount of gas generated during the storage period not only at the initial storage stage (initial stage of packaging) but also after long-term storage (hereinafter referred to as long-term gas-formation reduction effects), thereby suppressing a decrease in rate characteristics from pre-storage to post-storage.

(1) to contain a layered rock-salt compound in a positive-electrode active material
(2) to keep the charge rate within a predetermined range relative to the full charge capacity

The above effects are described in detail. First, the inventors have conducted a study of the formation of hydrogen gas and found that at the initial stage of shipment (shortly after packaging), the nonaqueous electrolyte tends to generate hydrogen gas when decomposed at negative-electrode abnormal active sites of a titanium compound which is a negative active material. When part of or the entire positive-electrode active material contains a charged layered rock-salt compound, the generated hydrogen gas seems to be occluded in the layered rock-salt compound to a certain degree. Moreover, the negative-electrode abnormal active sites react with the electrolyte and are coated by solid-electrolyte interface (SEI) film developed on the surface of negative-electrode active material as time elapses, substantially eliminating any chance of negative-electrode abnormal active sites being exposed to the nonaqueous electrolyte. Accordingly, the formation of hydrogen gas at negative-electrode abnormal active sites seems to subside as time elapses.

From the results above, the inventors of the present invention thought that when a secondary battery, formed by using a titanium compound as negative-electrode active material, is packaged and left standing for a while, adding a charged layered rock-salt compound to the positive-electrode active material of the secondary battery suppresses post-storage rate characteristics from a decrease caused by hydrogen gas generated at negative-electrode abnormal active sites.

Based on the study above, the inventors packaged a secondary battery by setting its state of charge (hereinafter referred to as "SOC" or a charge capacity) to be high and stored it for a long time in expectation of the hydrogen-gas occlusion effect by a layered rock-salt compound in a charged state. However, contrary to expectations, they found that abnormal active sites occurred in the charged layered rock-salt compound, generating an oxidation gas caused by side reactions between abnormal active sites and the nonaqueous electrolyte.

Formation of such an oxidation gas takes a different reaction pathway from that of hydrogen gas generated at abnormal active sites of a titanium compound, and the gas is derived from the layered rock-salt compound in a charged state. Accordingly, depending on the type of layered rock-salt compound in a charged state, substantially no oxidation gas is thought to be occluded. Thus, an oxidation gas that is formed during a long-term storage period has more serious long-term impact on the battery than hydrogen gas that is formed at the initial storage stage but is substantially entirely occluded by the layered rock-salt compound.

Therefore, based on the test results of the package, the inventors studied the amount of oxidation gas formed under certain packaging conditions, and found that the amount of gas formation was remarkably affected by the state of charge of the layered rock-salt compound shortly before the packaging process. In other words, the inventors have found that the amount of oxidation gas formation is suppressed by setting the charge rate of a nonaqueous electrolyte secondary battery to be within a predetermined range during the shipment phase.

Based on the above findings, an aspect of the present invention is a package that accommodates a pre-charged secondary battery in a packaging container. The secondary battery has a sealed case that encapsulates a positive electrode, nonaqueous electrolyte, negative electrode and separator. The positive electrode contains a layered rock-salt compound as positive electrode active material, and the negative electrode contains a titanium compound as negative-electrode active material and faces the positive electrode with the separator disposed in between; the separator is electrically insulative and is impregnated with the nonaqueous electrolyte; the packaging container accommodates the secondary battery; and the secondary battery in the packaging container is charged at 30% to 60% of the full charge capacity.

According to the present aspect, long-term gas-formation reduction effects are expected, and a decrease in rate characteristics is suppressed from pre-packaging through post-packaging.

In a preferred aspect, the positive electrode contains a layered rock-salt compound as positive-electrode active material at 2 wt.% to 5 wt.%.

According to the present aspect, since the amount of layered rock-salt compound is appropriate, the impact on cycle characteristics deriving from deterioration of the layered rock-salt compound is minimized, and excellent cycle characteristics are maintained.

In a preferred aspect, the secondary battery is set to be in an open circuit.

According to the present aspect, electrode reactions seldom occur and the state of charge is maintained.

The aspect above may have a storage case divisible into at least a first storage section and a second storage section; the first and second storage sections may each have a concave portion, and the storage case forms a storage space by combining the concave portions of the first and second storage sections so that the secondary battery is accommodated in the storage space.

According to the above aspect, since a secondary battery is accommodated in a storage case divisible into two or more storage sections, it is easier to accommodate a secondary battery when shipping, and it is easier to take out the secondary battery from the storage case when unpacking.

In a preferred aspect, the positive electrode further contains a spinel-type lithium manganese oxide as positive-electrode active material.

In a preferred aspect, the layered rock-salt compound is at least one type selected from a group consisting of lithium cobalt oxides, lithium nickel cobalt aluminum oxides and lithium nickel cobalt manganese oxides.

In a preferred aspect, the titanium compound is one type selected from among $Li_4Ti_5O_{12}$, $TiO_2$ (B) and $H_2Ti_{12}O_{25}$.

In a preferred aspect, after the secondary battery is accommodated in the packaging container and left there for 30 days at 25°C under an 1 atmospheric, the resulting charge rate is at least 98% of the charge rate measured shortly before accommodating the secondary battery in the packaging container.

In a preferred aspect, the secondary battery has a terminal electrically connected to the positive or negative electrode, the terminal extends from the inside to the outside of the sealed case, and the portion of the terminal exposed from the sealed case is covered with an insulative protective member.

An aspect of the present invention is a package that accommodates a pre-charged secondary battery in a packaging container; the secondary battery has a positive electrode, negative electrode and nonaqueous electrolyte; the positive electrode contains a spinel-type lithium manganese oxide and a layered rock-salt compound as positive-electrode active material, and the amount of layered rock-salt compound is 2 wt.% to 5 wt.%; the layered rock-salt compound is at least one type selected from a group consisting of lithium cobalt oxides, lithium nickel cobalt aluminum oxides and lithium nickel cobalt manganese oxides; the negative electrode contains at least one type of titanium compound selected from among $Li_4Ti_5O_{12}$, $TiO_2(B)$ and $H_2Ti_{12}O_{25}$; the packaging container accommodates the secondary battery; and the charge capacity of the secondary battery inside the packaging container is 30 to 60% of the full charge capacity.

According to the present aspect, long-term gas-formation reduction effects are achieved, while a decrease in rate characteristics is suppressed from pre-packaging through post-packaging. In addition, impact on cycle characteristics deriving from deterioration of the layered rock-salt compound is minimal, and excellent cycle characteristics are maintained.

In the above aspect, the nonaqueous electrolyte secondary battery is preferred to contain the spinel-type lithium manganese oxide at 95 wt.% to 98 wt.% and the layered rock-salt compound at 2 wt.% to 5 wt.%, relative to the entire weight of the positive-electrode active material.

In the above aspect, a decrease in the SOC is preferred to be no greater than 2% after the battery with its SOC set for a shipment phase is left standing at 25°C for 30 days.

In the above aspect, it is more preferred for the nonaqueous electrolyte secondary battery to have an extended terminal on the outer side of the sealed case and for the extended terminal to be protected by an insulative material when the battery is in a shipment phase.

EFFECTS OF THE INVENTION

Even when a secondary battery contains a titanium compound as its negative-electrode active material and after being stored for a long time in a warehouse or the like, the package related to the present invention is capable of preventing a post-storage decrease in rate characteristics of the unpacked secondary battery caused by formation of gas in the secondary battery.

BRIEF DESCRIPTION OF THE DRAWINGS

FIG. 1 is a perspective view showing the package according to a first embodiment of the present invention;
FIG. 2 is an exploded perspective view of the package shown in FIG. 1;
FIG. 3 is a cross-sectional view of the package shown in FIG. 1;
FIG. 4 is an exploded perspective view of the nonaqueous electrolyte secondary battery in FIG. 2;
FIG. 5 is a cross-sectional view of the nonaqueous electrolyte secondary battery in FIG. 2;
FIG. 6 is a cross-sectional view schematically showing an embodiment of the nonaqueous electrolyte secondary battery related to the present invention;
FIG. 7 is an exploded perspective view of the package according to a second embodiment of the present invention;
FIG. 8 is a partial breakaway perspective view of a storage unit in FIG. 7;
FIG. 9 is an exploded perspective view of the storage unit in FIG. 7;
FIG. 10 is an exploded perspective view illustrating a package in another embodiment of the present invention where storage units containing nonaqueous electrolyte secondary batteries are packed side by side in a planar direction;
FIG. 11 is an exploded perspective view illustrating a package in yet another embodiment of the present invention where storage units containing nonaqueous electrolyte secondary batteries are aligned in an upright posture; and
FIG. 12 is a perspective view schematically showing a usage example of the package related to the present invention.

DETAILED DESCRIPTION OF THE EMBODIMENTS

In the following, embodiments of the present invention are described. However, the present invention is not limited to the embodiments below. Note that conditions for descriptions provided below are 25°C under an 1 atmospheric pressure unless otherwise specified.

(Number-average Particle Size)

The number-average particle size in the present invention indicates that of secondary particles formed when primary particles are agglomerated. When there are no secondary particles of agglomerated primary particles, the number-average particle size indicates that of primary particles.

When particles are spherical, the particle size indicates its diameter, and for those that are not spherical, the particle size is obtained by measuring the major side of each particle using a scanning electron microscope (SEM) or transmission electron microscope (TEM) and by calculating the average size of the number of particles observed. To calculate accurately a number-average particle size, it is preferred to observe 50 or more particles picked at random by using an SEM.

(Specific Surface Area)

A specific surface area in the present application indicates the value calculated based on the results measured by a BET method.

Prior to describing package 100 related to the present invention, package 100 and embodiments of the present invention are schematically described. Then, by referring to the embodiments of the present invention, package 100 is described in detail.

<Packaging Container>

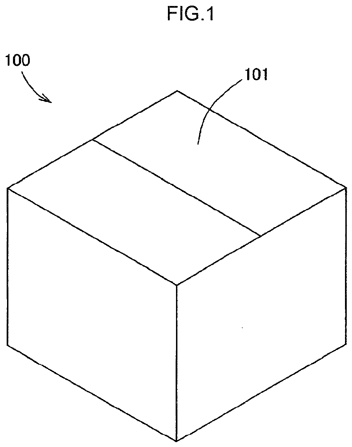

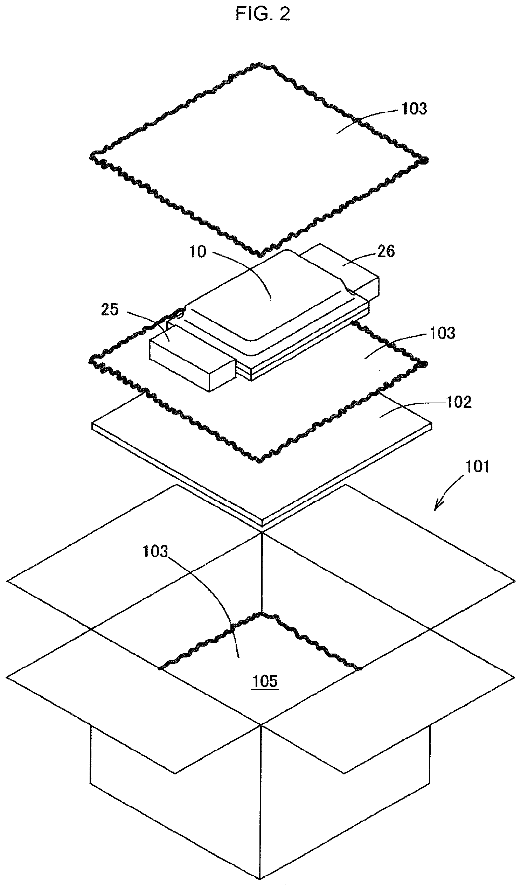

As shown in FIGs. 1 and 2, package 100 is where nonaqueous electrolyte secondary battery 10 (hereinafter may also be simply referred to as secondary battery 10) charged in advance is accommodated in packaging container 101.

<Package>

Packaging container 101 is a box capable of accommodating one or multiple secondary batteries 10.

<Nonaqueous Electrolyte Secondary Battery>

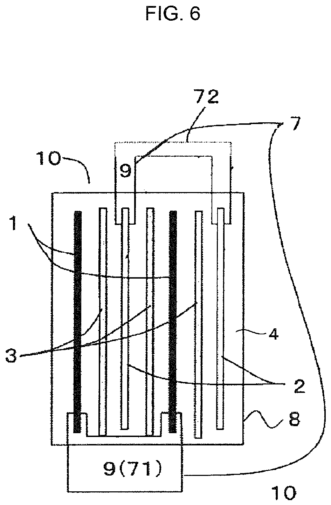

As shown in FIG. 6, nonaqueous electrolyte secondary battery 10 has sealed case 8 containing positive electrode 2, nonaqueous electrolyte 4, negative electrode 1 and separator 3 encapsulated therein. Inside sealed case 8, nonaqueous electrolyte 4 to carry lithium ion conduction is present on at least the surfaces of positive electrode 2, negative electrode 1 and separator 3.

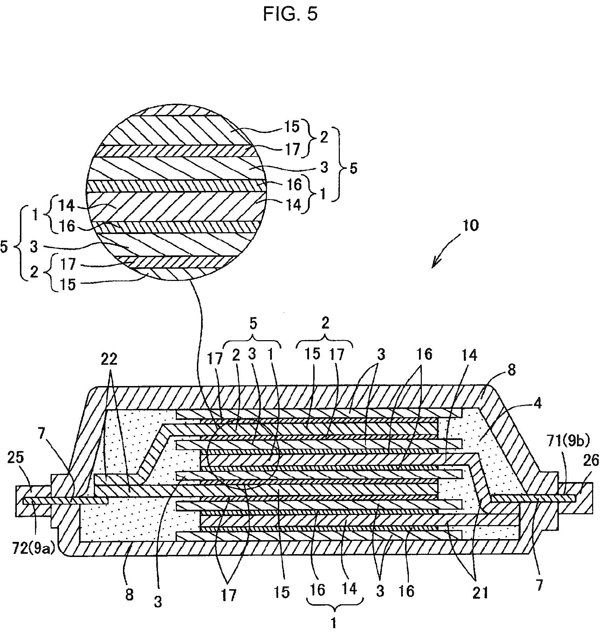

As shown in FIG. 5, positive electrode 2 and negative electrode 1 are the portions where active-material layers (17, 16) containing electrode active materials that contribute to electrode reactions are formed on current collectors (15, 14).

In other words, positive electrode 2 is the portion formed with part of current collector 15 and positive-electrode active-material layer 17, and negative electrode 1 is the portion formed with part of current collector 14 and positive-electrode active-material layer 16.

Members including such portions are respectively referred to as positive-electrode member 22 and negative-electrode member 21. Namely, positive-electrode member 22 is where positive-electrode active-material layer 17 is laminated on either or both of the surfaces of current collector 15, and negative-electrode member 21 is where negative-electrode active-material layer 16 is laminated on either or both of the surfaces of current collector 14.

In positive-electrode member 22 of the present embodiment, positive-electrode active-material layer 17 is laminated on both surfaces of current collector 15, and in negative-electrode member 21, negative-electrode active-material layer 16 is laminated on both surfaces of current collector 14.

Separator 3 is made of an electrical insulating material and sandwiched between negative electrode 1 and positive electrode 2. Namely, separator 3 is electrically insulative and disposed between negative electrode 1 and positive electrode 2.

As shown in FIG. 5, terminals 7 (72, 71) are set to make individual electrical connection with at least each of positive electrode 2 and negative electrode 1. Terminals (72, 71) have terminal extensions (9, 9) at least outside sealed case 8. Namely, terminals (72, 71) protrude from sealed case 8 of secondary battery 10, and terminal extensions (9, 9) are respectively the portions extending from terminals (72, 71).

Terminal extensions (9, 9) include positive-electrode terminal extended portion (9a) which is part of positive-electrode terminal 72 connected to positive electrode 2 and which extends outside sealed case 8, and negative-electrode terminal extended portion (9b) which is part of negative-electrode terminal 71 connected to negative electrode 1 and which extends outside sealed case 8.

In secondary battery 10, an electrode group is formed when multiple single cells 5, each of which is a laminate of positive electrode 2/separator 3/negative electrode 1 or negative electrode 1/separator 3/positive electrode 2, are stacked and other necessary components or the like are attached thereto.

More specifically, secondary battery 10 is preferred to be formed by stacking separator 3/positive electrode 2/positive electrode 2/separator 3/negative electrode 1/negative electrode 1/separator 3/positive electrode 2/positive electrode 2/separator 3/negative electrode 1/negative electrode/1/separator 3 in that order, then, the electrode group is encapsulated in an external cover such as laminate film so as to form sealed case 8. Secondary battery 10 is preferred to have sealed case 8 as its main body.

As shown in FIG. 5, secondary battery 10 of the present embodiment is formed by stacking separator 3/positive-electrode member 22/separator 3/negative-electrode member 21/separator 3/ positive-electrode member 22/separator 3/negative-electrode member 21/separator 3 in that order. The laminated portion is encapsulated in sealed case 8. Namely, electrode members (21, 22) are sandwiched by separators (3, 3) in secondary battery 10.

Alternatively, an electrode group is formed by rolling single cells 5, to which other necessary components are attached. Then, the electrode group is encapsulated in an external cover such as laminate film so as to form sealed case 8. Secondary battery 10 is preferred to have such sealed case 8 as its main body.

When it is in a shipment phase, secondary battery 10 is preferred to have a charge capacity (state of charge: SOC) at 30% to 60% of the full charge capacity.

Here, "in a shipment phase" indicates a phase that starts when secondary battery 10 is packaged for shipment and ends when secondary battery 10 is unpacked from packaging container 101 shortly before being connected to devices or the like to be actually used. Namely, since package 100 is in a shipment setting, the SOC of secondary battery 10 packaged in packaging container 101 is set at 30% to 60% of the full charge capacity.

The SOC is measured as follows.

Secondary battery 10 is charged at a low rate within its operating voltage range (for example, 0.1 C, the current value that requires 10 hours for charging battery 10 within the operating voltage range). Then, charging is tentatively stopped every 1/20th of the charging time at the low rate, and the voltage is measured after the battery is left standing for a certain period (for example, 5 hours). By so doing, a graph is constructed showing the relationship between voltage and SOC. The graph is used for reading the SOC value from a voltage of secondary battery 10.

Terminal extensions (9, 9) extending outside sealed case 8 are preferred to be protected by insulative protective members (25, 26) during the shipment phase so as to suppress an unwanted decrease in the SOC caused by self-discharge.

As for protective members (25, 26), insulative resins, for example, polyethylene terephthalate (PET) or the like may be used.

Next, package 100 according to a first embodiment of the present invention is described in detail.

Package 100 according to the first embodiment of the present invention indicates multiple secondary batteries 10 accommodated and packaged in packaging container 101 as shown in FIGs. 1, 2 and 3.

As shown in FIG. 2, package 100 consists of packaging container 101, divider member 102, cushioning material 103 and nonaqueous electrolyte secondary battery 10.

As shown in FIG. 1, the external shape of packaging container 101 is a rectangular or square box when boxed up, and has accommodation space 105 capable of accommodating secondary battery 10 as shown in FIG. 2.

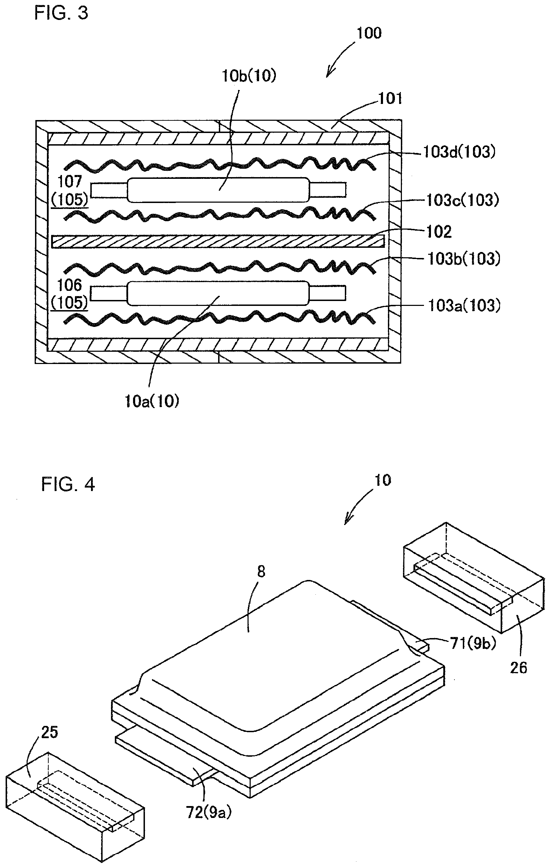

Divider member 102 is a plate-shape member to divide accommodation space 105 of packaging container 101 into multiple spaces. Divider member 102 of the present embodiment divides accommodation space 105 of packaging container 101 into multiple spaces in a top-to-bottom direction as shown in FIG. 3.

Cushioning material 103 is for preventing secondary battery 10 from damage caused by external impact, and alleviates impact between secondary battery 10 and other members by being arranged between secondary battery 10 and divider member 102 or between secondary battery 10 and packaging container 101.

Cushioning material 103 is a sheet-type cushioning material capable of elastic deformation and of wrapping partway or entirely around secondary battery 10.

Cushioning material 103 may also be a plate shape with a certain thickness.

As shown in FIGs. 4 and 5, secondary battery 10 has multiple negative-electrode members 21, multiple positive-electrode members 22, separators 3, terminals (72, 71) (terminal portions), sealed case 8 and protective members (25, 26).

In secondary battery 10, nonaqueous electrolyte 4 is filled in sealed case 8, and nonaqueous electrolyte 4 is impregnated into positive electrode 2, negative electrode 1 and separator 3. Secondary battery 10 is capable of carrying out lithium ion conduction between positive electrode 2 and negative electrode 1 through nonaqueous electrolyte 4 impregnated into separator 3.

To reduce internal resistance in battery 10, active-material layers (17, 16) containing electrode active materials are respectively formed on conductive current collectors (15, 14), forming positive-electrode member 22 and negative-electrode member 21 as shown in FIG. 5.

Moreover, conductive positive-electrode terminal 72 is connected to at least one positive-electrode member 22, and conductive negative-electrode terminal 71 is connected to at least one negative-electrode member 21.

Current collectors (15, 14) and terminals (72, 71) may be formed separately as in the present embodiment, or they may be integrated to be one entity containing a current collector portion and a terminal portion.

Of positive-electrode member 22 or negative-electrode member 21, at least active-material layer 17 or 16 and current collector 15 or 14 which form positive electrode 2 or negative electrode 1, along with terminal portion (terminal 72, 71) connected to electrode member 22 or 21, are encapsulated in sealed case 8.

Moreover, while those portions are encapsulated in sealed case 8, terminal extended portions (9a, 9b) of terminals (72, 71) protrude from sealed case 8. Terminal extended portions (9a, 9b) are set to be electrically connectable with external devices so as to be used for charging/discharging purposes.

As shown in FIG. 5, in secondary battery 10 of the present embodiment, positive-electrode members 22 and negative-electrode members 21 are entirely encapsulated in sealed case 8, while part of positive-electrode terminal 72 connected to one of positive-electrode members 22 and part of negative-electrode terminal 71 connected to one of negative-electrode members 21 are exposed from sealed case 8. The portions of positive-electrode terminal 72 and negative-electrode terminal 71 exposed from sealed case 8 are set to be terminal extended portions (9a, 9b) capable of making electrical connection with external devices so as to be used for charging/discharging purposes.

Regarding positive electrodes 2 of positive-electrode members 22, the ratio of the maximum area/minimum area, which shows variations in external surfaces among positive electrodes 2 used for electrode reactions, is preferred to be 1 to 1.3.

In other words, regarding the surface of positive electrode 2 formed with positive-electrode active-material layer 17 (outer surface of current collector 15), which is the external surface exposed to nonaqueous electrolyte 4 in sealed case 8 (referred to as electrode reactive surface in the present application), the ratio of the maximum area/minimum area, which shows variations among positive electrodes 2, is preferred to be 1 to 1.3.

The same applies to negative electrodes 1 of negative-electrode members 21; the ratio of the maximum area/minimum area, which shows variations in external surfaces among negative electrodes 1 used for electrode reactions, is preferred to be 1 to 1.3.

Namely, regarding the surface of negative electrode 1 formed with negative-electrode active-material layer 16 (outer surface of current collector 14), which is the external surface exposed to nonaqueous electrolyte 4 in sealed case 8 (electrode reactive surface), the ratio of the maximum area/minimum area, which shows variations among negative electrodes 1, is preferred to be 1 to 1.3.

In other words, the ratio of the maximum area to the minimum area of electrode reactive surfaces, which face separator 3 sandwiched by positive electrode 2 and negative electrode 1, is preferred to be 1 to 1.3.

Electrode reactive surfaces are more preferred to be set the same in all positive electrodes 2 or all negative electrodes 1.

Such a range contributes to enhancing homogeneous electrode reactions, thus making a highly reliable yet compact battery 10. The area of each electrode reactive surface in positive and negative electrodes (2, 1) is controlled, for example, by managing the coating width of slurry when active-material layers (17, 16) are formed on current collectors (15, 14).

Moreover, the ratio of maximum capacity/minimum capacity per unit area of each electrode, which indicates variations in the capacity per each unit area among positive electrodes 2 or negative electrodes 1, is preferred to be 1 to 1.3.

The ratio of maximum capacity/minimum capacity per unit area is more preferred to be the same among positive electrodes 2 or negative electrodes 1.

Namely, the ratio of maximum capacity/minimum capacity per unit area of positive electrodes 2 is preferred to be 1 to 1.3, and the capacity per unit area is more preferably the same. Also, the ratio of maximum capacity/minimum capacity per unit area of negative electrodes 1 is preferred to be 1 to 1.3, and the capacity per unit area is more preferably the same.

Such a setting contributes to enhancing homogeneous reactions at electrodes, thus making a battery that is highly reliable and compact.

The capacity per unit area of positive electrodes 2 and negative electrodes 1 is preferred to be controlled by adjusting the weight of active-material layers (17, 16) formed per unit area of current collectors (15, 14) when active-material layers (17, 16) are formed on current collectors (15, 14). The weight of active-material layers (17, 16) is controlled, for example, by adjusting the coating thickness during a coating process of active-material layers (17, 16).

Furthermore, when the capacity per unit area is set substantially the same among positive electrodes 2 or negative electrodes 1, while the capacity per unit area of positive electrode 2 is set as (A) and the capacity per unit area of negative electrode 1 is set as (B), the capacity ratio (B/A) is preferred to satisfy formula (1) below from the viewpoint of achieving a highly reliable battery by balancing reactions at positive electrode 2 and negative electrode 1.

$$0.8 \leq B/A \leq 1.3 \quad \cdots (1)$$

When the capacity ratio (B/A) is lower than 0.8 between negative electrode 1 and positive electrode 2 as they face each other, the capacity of negative electrode 1 may dip significantly compared with that of positive electrode 2. Therefore, when overcharged, lithium deposition potential may occur in negative electrode 1, and battery 10 may face a risk of short circuiting.

On the other hand, when the capacity ratio (B/A) exceeds 1.3 between negative electrode 1 and positive electrode 2 as they face each other, excessive side reactions may be caused in the negative-electrode active material not involved in electrode reactions, and unwanted gas may be generated when such side reactions occur in the sealed case.

Furthermore, the capacity ratio (B/A) is preferred to be at least 1.0; that is, the capacity ratio (B/A) is more preferred to satisfy formula (1') below.

$$1.0 \leq B/A \leq 1.3 \quad \cdots (1')$$

By so setting, the capacity of positive electrode 2 is smaller than that of negative electrode 1 to a certain degree, and a change in voltage during charge/discharge cycles is controlled by a change in potential of positive electrodes; that is, the battery is set to be under positive electrode regulation.

A battery under positive electrode regulation allows a minimal setting for the amount of positive-electrode active material that may have even the slightest chance of forming positive-electrode abnormal active sites that cause formation of oxidation gas during storage testing. Namely, setting positive-electrode regulations reduces the consumption of positive-electrode active material caused by reactions of positive-electrode abnormal active sites with nonaqueous electrolyte 4.

Moreover, the area of electrode reactive surface is set to be the same among positive electrodes 2 or negative electrodes 1; and the surface area of positive-electrode active-material layer 17 facing negative electrode 1 across separator 3 is set as (C), and the surface area of negative-electrode active-material layer 16 facing positive electrode 2 across separator 3 is set as (D).

In the above setting, the area ratio (D/C) between positive-electrode active-material layer 17 and negative-electrode active-material layer 16 is preferred to satisfy formula (2) below to make a highly reliable battery by balancing electrode reactions at positive electrode 2 and electrode reactions at negative electrode 1.

$$0.8 \leq D/C \leq 1.2 \quad \cdots (2)$$

When the area ratio (D/C) is smaller than 0.8, the capacity of negative electrode 1 may dip significantly compared with that of positive electrode 2. Thus, when overcharged, lithium deposition potential occurs in negative electrode 1, and battery 10 may face a risk of short circuiting.

On the other hand, an area ratio (D/C) exceeding 1.2 means there is a portion of negative electrode that does not face positive electrode 2. Thus, in such a bare portion, excessive side reactions of negative-electrode active material not involved in electrode reactions may be triggered, and unwanted gas may be generated when such side reactions occur in sealed case 8.

Furthermore, the area ratio (D/C) is more preferred to be 1.0 or greater; that is, the area ratio (D/C) is more preferred to satisfy formula (2') below.

$$1.0 \leq D/C \leq 1.2 \quad \cdots (2')$$

An area ratio (D/C) of 1.0 or greater makes it easier to set the battery under positive electrode regulation. In addition, with separator 3 disposed in between, the surface of positive-electrode active-material layer 17 can be entirely covered by negative-electrode active-material layer 16 which contains as its main component a titanium compound with excellent safety properties in the event of short circuiting. Accordingly, a battery with excellent safety properties is achieved.

In order to increase the capacity of battery 10 while enhancing its power density, the capacity per 1 $cm^2$ of each electrode is preferred to be 0.5 mAh to 4.0 mAh at the electrode reactive surface. Especially, positive electrode 2 is preferred to have a capacity of 3.0 mAh or lower per 1 $cm^2$.

A lower capacity of electrodes (2, 1) may increase the battery size to achieve a battery having a desired capacity. On the other hand, the power density tends to decrease if set to have a greater capacity in electrodes (2, 1).

The capacity per unit area of each electrode is determined by preparing a half cell using a lithium metal as its counter electrode after each electrode is formed, and by analyzing the charge/discharge characteristics of the half cell.

<Positive-electrode Member>

As shown in FIG. 5, positive-electrode member 22 is formed by stacking positive-electrode active material layer 17 on either or both of the surfaces of current collector 15; that is, positive electrode 2 is formed on either or both of the sides of current collector 15.

At the time of charging battery 10, positive electrode 2 works to release lithium ions into nonaqueous electrolyte 4 while supplying electrons through positive-electrode terminal 72. Also, at the time of discharging battery 10, positive electrode 2 works to receive lithium ions from nonaqueous electrolyte 4 while accepting electrons through positive-electrode terminal 72.

As shown in FIG. 6, positive electrode 2 is preferred to be set as part of a member where positive-electrode active-material layer 17, containing at least a positive-electrode active material, is formed on current collector 15. When part of positive-electrode member 22 is encapsulated in sealed case 8 and a portion of it is extended outside sealed case 8 as positive-electrode extended terminal portion (9a), electrical connection with external devices is made available.

In positive-electrode member 22 of the present embodiment, positive electrode 2 is formed by laminating positive-electrode active-material layer 17 on part of current collector 15 as shown in FIG. 5. Positive-electrode member 22 is electrically connectable with external devices when it is connected to positive-electrode terminal 72 extending from the inside to the outside of sealed case 8.

(Negative-electrode Member)

As shown in FIG. 5, negative-electrode member 21 is formed by stackingl negative-electrode active material layer 16 on either or both of the surfaces of current collector 14; that is, negative electrode 1 is formed on either or both of the sides of current collector 14.

At the time of charging battery 10, negative electrode 1 works to accept lithium ions from nonaqueous electrolyte 4 while receiving electrons through negative-electrode terminal 71. Also, at the time of discharging battery 10, negative electrode 1 works to release lithium ions into nonaqueous electrolyte 4 while emitting electrons through negative-electrode terminal 71.

As shown in FIG. 6, negative electrode 1 is preferred to be set as a part of a member where negative-electrode active-material layer 16, containing at least a negative-electrode active material, is formed on current collector 14. When part of negative-electrode member 21 is encapsulated in sealed case 8 and a portion of current collector 14 in negative-electrode member 21 or negative-electrode terminal 71 is extended outside sealed case 8 as negative-electrode extended terminal portion (9b), the electrode is electrically connectable with external devices.

In negative-electrode member 21 of the present embodiment, negative electrode 1 is formed by stacking negative-electrode active-material layer 16 on part of current collector 14 as shown in FIG. 5. Negative-electrode member 21 is electrically connectable with external devices when it is connected to negative-electrode terminal 71 extending from the inside to the outside of sealed case 8.

Negative electrode 1 is characterized by having a titanium compound as the primary component of its negative-electrode active material. In negative electrode 1 of the present embodiment, a titanium compound is the main component of its negative-electrode active material.

The "primary component" above means an active component that is capable of working effectively as an electrode.

Also, the "main component" means the component is contained at 50% or more of the entire amount. Namely, as a component of negative electrode 1, a titanium compound is contained at 50 masses% or more of the entire negative-electrode active material.

Generally, titanium compounds capable of inserting/extracting lithium ions have smaller expansion/contraction rates of active material during insertion/extraction reactions of lithium ions than conventional electrode active-materials such as cobalt oxides. Therefore, when titanium compounds expand/contract, their convective effect of stirring nonaqueous electrolyte 4 is smaller, compared with conventional substances for electrode active material, for example, substances for positive-electrode active material such as lithium cobalt oxides, which are similar metal oxides, and negative-electrode active-material substances such as carbons.

Considering the above, as for the sites to insert/extract a certain amount of lithium ions, it is necessary to secure a negative-electrode specific surface area greater than the size in conventional electrodes.

Accordingly, the specific surface area of negative electrode 1 is preferred to be 1 $m^2/g$ to 100 $m^2/g$.

A specific surface area smaller than 1 m$^2$/g causes a decrease in the sites for insertion/extraction of lithium ions, and the battery may fail to achieve desired battery capacity.

On the other hand, a specific surface area of greater than 100 m$^2$/g tends to facilitate side reactions other than insertion/extraction of lithium ions such as decomposition reactions of nonaqueous electrolyte 4. As a result, the battery may also fail to achieve desired battery capacity.

The specific surface area of negative electrode 1 is more preferred to be 2 m$^2$/g to 50 m2/g. By so setting, sites for insertion/extraction of lithium ions are secured for expressing desired battery capacity while reducing side reactions other than insertion/extraction of lithium ions.

The specific surface area of negative electrode 1 is even more preferred to be 3 m$^2$/g to 30 m2/g. Such a range minimizes the progress of side reactions, while excellent balance is achieved for insertion/extraction of lithium ions.

The specific surface area of negative electrode 1 is controlled by changing a mixing ratio of types and amounts of negative-electrode active material, conductive additive and binder. Alternatively, the specific surface area is controlled by compressing negative electrode 1 to a desired thickness.

<Active-material Layer>

Raw materials for forming active-material layers (17, 16) contain at least an active material for each of electrodes (2, 1). To enhance properties of active-material layers (17, 16), raw materials for forming active-material layers (17, 16) may also contain a conductive additive and a binder.

Positive electrode 2 and negative electrode 1 are preferred to be formed respectively when a mixture containing raw materials above is arranged on current collectors (15, 14) as active-material layers (17, 16).

Active-material layers (17, 16) of the present embodiment each contain a conductive auxiliary and binder in addition to active material.

Considering the ease of conducting the procedure, a preferred method for forming active-material layers (17, 16) is preparing a slurry of the above mixture and a solvent, coating the slurry on current collectors (15, 14), drying the slurry to remove the solvent, and so on.

After active-material layers (17, 16) are formed, they are preferred to be compressed to a desired thickness and density. The compression method is not limited particularly; for example, roll pressing, hydraulic pressing or the like may be employed.

When rolled, active-material layers (17, 16) are preferred to have a thickness of 10 $\mu$m to 200 $\mu$m after being rolled.

When the thickness of active-material layers (17, 16) is 10 $\mu$m or less, a desired capacitance may be difficult to obtain, whereas when the thickness of active-material layers (17, 16) is greater than 200 $\mu$m, a desired power density may be difficult to obtain.

If roll pressing is employed, the density of active-material layers (17, 16) is preferred to be 1.0 g/cm$^3$ to 4.0 g/cm$^3$ after being rolled

If a density of active-material layers (17, 16) is less than 1.0 g/cm$^3$, insufficient contact may be caused between the active material of each electrode and the current collectors, conductive additive or the like, and the electron conductivity is lowered. Accordingly, the internal resistance of battery 10 may increase.

On the other hand, if a density of active-material layers (17, 16) is greater than 4.0 g/cm$^3$, it may be difficult for nonaqueous electrolyte 4 to permeate active-material layers (17, 16) of the electrodes, and lithium conductivity is thereby lowered.

Accordingly, the internal resistance of battery 10 may also increase.

Especially, the density of positive-electrode active-material layer 17 of positive electrode 2 is more preferred to be set at 2.0 g/cm$^3$ or higher, even more preferably 2.2 g/cm$^3$ to 3.5 g/cm$^3$ by roll pressing the layer.

To achieve the best balance, the density of positive-electrode active-material layer 17 is especially preferred to be set at 2.5 g/cm$^3$ to 3.0 g/cm$^3$.

Also, the density of negative-electrode active-material layer 16 of negative electrode 1 is more preferred to be set at 1.5 g/cm$^3$ or higher, even more preferably 1.6 g/cm$^3$ to 2.3 g/cm$^3$, by roll pressing the layer.

To achieve the best balance, the density of negative-electrode active-material layer 16 is especially preferred to be set at 1.8 g/cm$^3$ to 2.2 g/cm$^3$.

Forming active-material layers (17, 16) on current collectors (15, 14) is not limited to any specific method; for example, coating the above slurry by using a doctor blade, die coater, comma coater or the like and removing the solvent, spraying the slurry and removing the solvent, or the like are preferred.

To remove the solvent, drying in an oven or a vacuum oven is easier and preferable. The environment for removing a solvent may be air or inert gas set at room temperature or higher, vacuum conditions or the like.

The temperature at the removal of solvent is not limited specifically; it is preferred to be 60°C to 300°C, more preferably 80°C to 250°C, even more preferably 230°C or lower.

By setting in such a range, time for removing a solvent is shortened while decomposition of material in active-material layers (17, 16) and deterioration of a binder are prevented.

Active-material layers (17, 16) of the electrodes may be formed in any order. Namely, either of active-material layers (17, 16) may be formed first.

Forming a slurry is not limited to any particular method, but to homogeneously mix the above mixtures and a solvent, it is preferred to use a rotation/revolution mixer, ball mill, planetary mixer, jet mill, or thin-film spin mixer.

Considering the ease of procedure, a slurry is preferred to be formed using a rotation/revolution mixer, planetary mixer, or thin-film spin mixer.

In addition, it is an option to form a slurry by adding a solvent to the mixture, or by mixing the above mixture and solvent all at once.

The solvent is preferred to be a nonaqueous solvent or water.

A nonaqueous solvent is not limited specifically; examples are N-methyl-2-pyrrolidone (NMP), dimethylformamide, dimethylacetamide, methyl ethyl ketone, methyl acetate, ethyl acetate, tetrahydrofuran and the like. Furthermore, dispersants and thickeners may also be added to the above solvents.

The solid content of a slurry is preferred to be 30 wt.% to 80 wt.% to have an appropriate viscosity for forming active-material layers (17, 16).

<Active Material>

The bulk density of powdered active material for each electrode is preferred to be 0.2 $g/cm^3$ or higher, but 2.8 $g/cm^3$ or lower, more preferably 2.5 $g/cm^3$ or lower.

If set in such a range, when forming a slurry of the above mixture by using a powdered active material, it is easier to mix in a conductive additive and binder while the necessary amount of solvent is set at an appropriate level.

(Positive-electrode Active Material)

The positive-electrode active material for forming positive electrode 2 is a powdered substance and contains a layered rock-salt active material, which is a layered rock-salt compound. Positive electrode 2 of the present embodiment contains two types of positive-electrode active material -- a layered rock-salt active material and a spinel-type lithium manganese -- as its primary components.

A layered rock-salt active material is not limited to any specific type; examples are a layered rock-salt compound such as $LiMeO_2$ (Me is a transition metal) representing lithium nickel composite oxides (such as $LiNiO_2$), lithium cobalt composite oxides ($LiCoO_2$), lithium nickel cobalt composite oxides (such as $LiNi_{1-y}Co_yO_2$), lithium nickel cobalt manganese composite oxides ($LiNi_xCo_yMn_{1-y-z}O_2$, x+y+z=1), solid solutions of $LiMnO_3$, $Li_2MnO_3$ and $Li_xMeO_2$, formed to have excess lithium, and the like.

Here, "a layered rock-salt compound" means a compound having a layered rock-salt crystal structure.

Because of a greater gas reduction effect, preferred examples of a layered rock-salt active material are lithium cobalt oxide ($LiCoO_2$), lithium nickel cobalt aluminum oxide ($LiNi_{0.8}Co_{0.15}Al_{0.05}O_2$) and lithium nickel cobalt manganese oxide ($LiNi_xCo_yMn_{1-y-z}O_2$, x+y+z=1); especially preferably, lithium cobalt oxide ($LiCoO_2$).

When lithium cobalt oxide ($LiCoO_2$) is used as the layered rock-salt active material, the effect of occluding hydrogen gas is further enhanced, and the amount to be added is thereby reduced. Moreover, using lithium cobalt oxide ($LiCoO_2$) as the layered rock-salt active material results in further improvement in the long-term reduction of oxidation gas formation. Accordingly, long-term reliability of the battery performance is enhanced.

To form positive electrode 2, one type or two or more types of layered rock-salt active materials may be used.

Surfaces of a layered rock-salt active material may be coated by organic materials such as polyethylene glycol; inorganic materials such as aluminum oxide, magnesium oxide, zirconium oxide, and titanium oxide; carbon material and the like.

To balance the reduction effect of gas formation and deterioration of a layered rock-salt active material, the specific surface area of a layered rock-salt active material is preferred to be 0.3 $m^2/g$ to 0.6 $m^2/g$.

The specific surface area of a layered rock-salt active material is more preferred to be 0.4 $m^2/g$ to 0.5 $m^2/g$ to especially stabilize rate characteristics after long-term storage.

A specific surface area of less than 0.3 $m^2/g$ makes it harder to obtain a sufficient gas reduction effect since there are fewer surface active sites for gas occlusion.

A specific surface area of greater than 0.6 $m^2/g$ increases the area of disturbed layered structure, and the characteristics may be lowered after long-term storage.

The number-average particle size on the surface appearance of a layered rock-salt active material is preferred to be 3 $\mu$m to 9 $\mu$m from the viewpoint of balancing the reduction effects of gas formation and material deterioration of the layered rock-salt active material.

The number-average particle size on the surface appearance of a layered rock-salt active material is more preferred to be 5 $\mu$m to 7 $\mu$m, since characteristics during long-term storage are especially stabilized.

When a number-average particle size is smaller than 3 $\mu$m, the specific surface area of the particles increases, thus resulting in more regions with a disturbed layered structure. Accordingly, the characteristics during long-term storage may be lowered.

Moreover, when the number-average particle size is greater than 9 $\mu$m, surface active sites per volume for gas occlusion are reduced. Accordingly, a sufficient gas reduction effect is hard to obtain.

When a titanium compound is used as negative-electrode active material, the positive-electrode active material capable of expressing the gas-formation reduction effect is a layered rock-salt active material. The mechanism for suppressing a gas is unclear, but a layered rock-salt active material is effective for gas occlusion, and it is thought that a higher gas reduction effect is achieved especially when its state of charge is maintained.

However, a layered rock-salt active material has disadvantages: for example, when charge/discharge cycles are repeated, its layered structure is damaged, lowering the capacitance itself of positive electrode 2; and a gas is further formed when the electrolyte is decomposed at positive-electrode abnormal active sites newly added to surfaces of layered rock-salt active material.

Therefore, positive electrode 2 of secondary battery 10 is preferred to further contain such material which shows less expansion/contraction at insertion/expansion of lithium ions, and which is less likely to deteriorate. Namely, in addition to the above layered rock-salt active material, positive electrode 2 of secondary battery 10 is preferred to contain a spinel-type lithium manganese oxide in which positive-electrode abnormal active sites are less likely to occur.

In positive electrode 2 of secondary battery 10 of the present embodiment, both a spinel-type lithium manganese oxide and layered rock-salt active material are used as positive-electrode active material. Therefore, secondary battery 10 is less likely to experience a decrease in its characteristics during long-term storage, and exhibits higher reliability and a longer lifetime when used after storage.

A layered rock-salt active material is preferred to be contained at 2 wt.% to 5 wt.% of the entire active-material weight in positive electrode 2. Meanwhile, a spinel-type lithium manganese oxide is preferred to be contained at 95 wt.% to 98 wt.% of the entire active-material weight in positive electrode 2.

Namely, the weight ratio of a layered rock-salt active material and spinel-type lithium manganese oxide is preferred to be 2-5 parts by weight of a layered rock-salt active material and 95~98 parts by weight of spinel-type lithium manganese oxide relative to 100 parts by weight of the entire active material in positive electrode 2.

By setting in such a range, the reduction effects of gas formation and deterioration of layered rock-salt active material will be well balanced.

A spinel-type lithium manganese oxide is a compound represented by $Li_{1+x}M_yMn_{2-x-y}O_4$ ($0 \leq x \leq 0.2$, $0 < y \leq 0.6$, and "M" is an element that belongs to Groups 2~13 and Periods 3 and 4).

"M" in the above is at least one element selected from among those belonging to Groups 2~13 and Periods 3 and 4.

"M" is preferred to be Al, Mg, Zn, Co, Fe or Cr, more preferably Al, Mg, Zn or Cr, even more preferably Al, Mg or Zn, since such an element is less likely to cause dissociation of manganese or the like and significantly contributes to enhancing cycle stability.

When (x) is less than zero (x<0) in the above chemical formula, the capacitance of positive-electrode active material tends to decrease.

When (x) is greater than 0.2 (x>0.2), impurities such as lithium carbonate are more likely to be contained. When (y) of the above chemical formula is zero (y=0), the stability of positive-electrode active material tends to be lower, whereas when (y) is greater than 0.6 (y>0.6), impurities such as oxides of (M) are more likely to be contained.

Among those listed above, because of its effect of enhancing stability, a spinel-type lithium manganese oxide is preferred to be one type selected from among $Li_{1+x}Al_yMn_{2-x-y}O_4$ ($0 \leq x \leq 0.1$, $0 < y \leq 0.1$), $Li_{1+x}Mg_yMn_{2-x-y}O_4$ ($0 \leq x \leq 0.1$, $0 < y \leq 0.1$), $Li_{1+x}Zn_yMn_{2-x-y}O_4$ ($0 \leq x \leq 0.1$, $0 < y \leq 0.1$) and $Li_{1+x}Cr_yMn_{2-x-y}O_4$ ($0 \leq x \leq 0.1$, $0 < y \leq 0.1$); more preferably, $Li_{1+x}Al_yMn_{2-x-y}O_4$ ($0 \leq x \leq 0.1$, $0 < y \leq 0.1$) or $Li_{1+x}Mg_yMn_{2-x-y}O_4$ ($0 \leq x \leq 0.1$, $0 < y \leq 0.1$); even more preferably, $Li_{1+x}Al_yMn_{2-x-y}O_4$ ($0 \leq x \leq 0.1$, $0 < y \leq 0.1$).

In addition, it is especially preferable if (y) in the above listed compound ($Li_{1+x}Al_yMn_{2-x-y}O_4$) is set to be $0.03 \leq y \leq 0.1$, since an even greater effect is obtained.

The number-average particle size on the surface appearance of a powdered spinel-type lithium manganese oxide is preferred to be 10 $\mu$m to 20 $\mu$m to maximize the gas-formation reduction effect.

The number-average particle size on the surface appearance of a powdered spinel-type lithium manganese oxide is more preferred to be 15 $\mu$m to 20 $\mu$m to especially stabilize the characteristics after long-term storage.

The specific surface area of a powdered spinel-type lithium manganese oxide is preferred to be 0.05 $m^2$/g to 0.4 $m^2$/g to achieve a desired power density.

The specific surface area of a powdered spinel-type lithium manganese oxide powder is more preferred to be 0.1 $m^2$/g to 0.3 $m^2$/g to especially stabilize the characteristics during long-term storage.

(Negative-electrode Active Material)

The negative-electrode active material of negative electrode 1 is a powder and contains a titanium compound as its primary component. As described above, the negative-electrode active material of the present embodiment contains a titanium compound as its main component.

Also, as another negative-electrode active material, the negative-electrode active material may also contain elements other than lithium and titanium, for example, niobium (Nb), at a content of lower than 50 mass%. The negative-electrode active material is preferred to contain a titanium compound at 80 masses% or greater and another element other than the titanium compound at 20 masses% or less.

It is more preferable for the negative-electrode active material to be a titanium compound containing a trace amount of elements other than lithium and titanium, for example, niobium (Nb).

As a titanium compound of the negative-electrode active material, titanic acid compounds, lithium titanate, titanium dioxide and the like are preferred. In addition, those titanium compounds may be coated with a carbon material, metal oxide or polymer to enhance their conductivity and improve their stability.

Preferred examples of a titanic acid compound are $H_2Ti_3O_7$, $H_2Ti_4O_9$, $H_2Ti_5O_{11}$, $H_2Ti_6O_{13}$ and $H_2Ti_{12}O_{25}$, more preferably $H_2Ti_{12}O_{25}$, because they contribute to maintaining stability in the characteristics during long-term storage.

A lithium titanate is preferred to be a spinel type or a ramsdellite type, preferably a compound represented by a molecular formula of $Li_4Ti_5O_{12}$. When it is a spinel-type compound, expansion/contraction of an active material is smaller during insertion/extraction reactions of lithium ions.

The titanium dioxide is preferred to be anatase or bronze ($TiO_2$(B)). A bronze type is more preferred, since it increases the efficiency of the insertion/extraction of lithium ions. Alternatively, it is also an option to use a mixture of anatase and bronze types.

A particularly preferable titanium compound is $Li_4Ti_5O_{12}$, since such a setting is capable of providing a negative electrode with excellent safety and stability. Accordingly, a nonaqueous electrolyte secondary battery is obtained to have excellent safety and stability.

Those titanium compounds listed above may be used alone or in combination thereof.

<Conductive Additive>

Active-material layers (17, 16) of the present embodiment contain a conductive additive since they are low in electron conductivity. The conductive additive in active-material layer 17 of positive electrode 2 is not limited specifically, but a carbon material is preferred since it is inexpensive.

The conductive additive in active-material layer 16 of negative electrode 1 is not limited specifically, and a metallic or carbon material may be used.

As for the metallic material, it is preferred to use at least one type selected from a group consisting of copper and nickel.

Examples of carbon material are natural or artificial graphite, gas-phase grown carbon fibers, carbon nanotubes, acetylene black, Ketjenblack, furnace black and the like. Those carbon materials may be used alone or in combination thereof.

The amount of a conductive additive contained in positive-electrode active-material layer 17 is preferred to be 1 to 30 parts by weight, more preferably 2 to 10 parts by weight, per 100 parts by weight of the positive-electrode active material.

Per 100 parts by weight of the negative-electrode active material, the amount of conductive additive contained in negative-electrode active-material layer 16 is preferred to be 0.5 to 30 parts by weight, more preferably 1 to 10 parts by weight, since such a setting contributes to excellent balance between output power and energy density.

By setting in such ranges, conductivity is secured in positive and negative electrodes (2, 1). Also, adhesiveness with binders is maintained, while sufficient adhesiveness with current collectors (15, 14) is achieved.

<Binder>

Active-material layers (17, 16) are each preferred to contain a binder to bond the active material to current collectors (15, 14).

The type of binder is not limited specifically, but it is preferred to use at least one type selected from a group consisting of polyvinylidene fluoride (PVdF), polytetrafluoroethylene (PTFE), styrene-butadiene rubber, polyimide and their derivatives.

To balance the bonding strength and energy density, the amount of binder contained in active-material layers (17, 16) of electrodes (2, 1) is preferred to be 1 to 30 parts by weight, more preferably 2 to 15 parts by weight, per 100 parts by weight of active material in each electrode.

By setting in such a range, conductivity in positive and negative electrodes (2, 1) is secured. Also, the adhesiveness between a conductive auxiliary and active material of each electrode is maintained, while sufficient adhesiveness with current collectors is achieved.

A binder is preferred to be dissolved or dispersed in a nonaqueous solvent or water, considering the ease of preparing positive and negative electrodes (2, 1).

A nonaqueous solvent is not limited to any particular type; examples are N-methyl-2-pyrrolidone (NMP), dimethylformamide, dimethylacetamide, methyl ethyl ketone, methyl acetate, ethyl acetate, tetrahydrofuran and the like. A dispersant and thickener may be added.

<Current Collector>

Positive electrode 2 and negative electrode 1 are preferred to be where active material layers (17, 16), which are raw-material layers containing active material, are formed on current collectors (15, 14). To form a high-performance compact battery, active-material layers (17, 16), each having the same polarity, are more preferred to be formed on both surfaces of current collectors (15, 14) respectively.

Current collectors (15, 14) are not limited to being in a specific shape, as long as they are conductive and are used as core material for electrodes (2, 1).

For forming current collectors (15, 14), it is preferred to use a sheet- or film-form current-collecting foil, since such a foil is easier to obtain at a low cost.

Materials for current collectors (15, 14) are, for example, those prepared by coating a metal that does not react with the potential of positive electrode 2 or negative electrode 1 (for example, aluminum for positive electrode 2, aluminum or copper for negative electrode 1) on the surface of aluminum, aluminum alloys, and metals other than aluminum (copper, SUS, nickel, titanium and their alloys).

The material for current collectors (15, 14) is preferred to be aluminum because it is easier to obtain at a low cost. Especially, considering the stability under a positive-electrode reaction atmosphere, the material of current collector 15 for positive electrode 2 is more preferred to be high purity aluminum such as those specified in JIS standards (1030, 1050, 1085, 1N90, 1N99) and the like.

The thickness of current collectors (15, 14) is not limited particularly, and is preferred to be 10 $\mu$m to 100 $\mu$m.

If the thickness of current collectors (15, 14) is less than 10 $\mu$m, handling may be difficult during the production process, whereas a thickness of greater than 100 $\mu$m is disadvantageous from an economic point of view.

<Separator>

Separator 3 is disposed between positive electrode 2 and negative electrode 1 and works as an intermediate for lithium ion conduction between them while blocking electron or hole conduction. As long as separator 3 is neither electron conductive nor hole conductive, separator 3 may contains various plasticizers, antioxidants, flame retardants and the like, and may be coated with metal oxides or the like.

The material of separator 3 needs to be electrical insulating and is preferred to be formed by using only a material with a specific resistance of at least 108 $\Omega$·cm.

Examples of material for separator 3 are nylon, cellulose, polysulfone, polyethylene, polypropylene, polybutene, polyacrylonitrile, polyimide, polyamide and PET, as well as woven fabrics, non-woven fabrics, microporous membranes and the like made by combining two or more of the above.

With regard to practical use, the material for separator 3 is preferred to be at least one type selected from a group consisting of a cellulose non-woven fabric, polypropylene, polyethylene, and PET, more preferably polypropylene, polyethylene, and cellulose non-woven fabric.

In secondary battery 10, the area ratio (F/E) of separator 3 and electrodes (2, 1) is not limited particularly, but is preferred to satisfy formula (3) below.

$$1.0 \leq F/E \leq 1.5 \quad \cdots (3)$$

In the above, among positive and negative electrodes (2, 1), "E" is the area of an electrode having a greater area than the other. "F" is the area of separator 3. Namely, "E" is the maximum electrode area among electrodes of single cell 5, and "F" is the area of separator 3 facing the electrode having the maximum electrode area in single cell 5.

When the area ratio (F/E) is less than 1, positive electrode 2 and negative electrode 1 may touch each other, causing short circuiting.

An area ratio (F/E) greater than 1.5 increases the volume of an external cover and fails to make a compact battery 10. Thus, its power density may decrease.

The thickness of separator 3 is preferred to be 10 $\mu$m to 100 $\mu$m.

If the thickness of separator 3 is less than 10 $\mu$m, positive electrodes 2 and negative electrodes 1 may come into direct contact. If the thickness of separator 3 is greater than 100 $\mu$m, the internal resistance of battery 10 may increase.

The thickness of separator 3 is more preferred to be 15 $\mu$m to 50 $\mu$m, considering cost performance and ease of handling.

<Nonaqueous Electrolyte>

The amount of nonaqueous electrolyte 4 in sealed case 8 is not limited specifically. The amount of nonaqueous electrolyte 4 is preferred to be at least 0.1 mL per battery capacity of 1 Ah so that the electrolyte is capable of sufficiently carrying the conduction of lithium ions derived from electrode reactions, and desired battery performance is expressed. Namely, the amount of nonaqueous electrolyte 4 is preferred to be 0.1 mL/Ah or greater.

Nonaqueous electrolyte 4 may be impregnated in advance into positive electrode 2, negative electrode 1 and separator 3, or may be added after rolling or stacking a structure where separator 3 is disposed between positive electrode 2 and negative electrode 1. In the present embodiment, nonaqueous electrolyte 4 is filled in sealed case 8, and is impregnated into positive electrode 2, negative electrode 1 and separator 3.

Nonaqueous electrolyte 4 is not limited to any specific type; examples are an electrolyte prepared by dissolving a solute in a nonaqueous solvent, a gel electrolyte prepared by impregnating a polymer with an electrolyte made by dissolving a solute in a nonaqueous solvent, and the like. Also, nonaqueous electrolyte 4 may contain a trace amount of additives such as a flame retardant and stabilizer.

As the nonaqueous solvent, an aprotic solvent is preferred, since the solvent is less likely to decompose under an action potential in secondary battery 10. It is more preferred to be an aprotic solvent containing a polar aprotic solvent.

A polar aprotic solvent is further preferred to be at least one type selected from a group consisting of cyclic aprotic solvents and chain aprotic solvents.

It is especially preferred for a nonaqueous solvent to contain a cyclic polar aprotic solvent and/or chain polar aprotic solvent.

Examples of a cyclic polar aprotic solvent are cyclic carbonates, cyclic esters, cyclic sulfones, cyclic ethers and the like.

Examples of a cyclic carbonate are ethylene carbonate, propylene carbonate, fluoroethylene carbonate, butylene carbonate and the like.

Examples of a chain polar aprotic solvent are acetonitrile, chain carbonates, chain carboxylic acid esters, chain ethers and the like.

Examples of chain carbonates are dimethyl carbonate, diethyl carbonate, ethyl methyl carbonate and the like.

More specifically, nonaqueous solvents are dimethyl carbonate, methyl ethyl carbonate, diethyl carbonate, dipropyl carbonate, methyl propyl carbonate, ethylene carbonate, fluoroethylene carbonate, propylene carbonate, butylene carbonate, $\gamma$-butyrolactone, 1,2-dimethoxyethane, sulfolane, dioxolane, methyl propionate and the like.

Those solvents may be used alone or in combination thereof. Using a solvent prepared by mixing two or more is preferred since the solubility of a solute as the later-described supporting salt is better and lithium ion conductivity is enhanced.

The solute is not limited specifically. Preferred examples are $LiClO_4$, $LiBF_4$, $LiPF_6$, $LiAsF_6$, $LiCF_3SO_3$, LiBOB (lithium bis(oxalate)borate), $LiN(SO_2CF_3)_2$, and the like, because they are easier to dissolve in the aforementioned nonaqueous solvents. Among them, $LiPF_6$ is more preferred.

The concentration of a solute in nonaqueous electrolyte 4 is preferred to be 0.5 mol/L to 2.0 mol/L. Desired lithium ion conductivity may not be expressed in a concentration of lower than 0.5 mol/L, while in a concentration of higher than 2.0 mol/L, an excess amount of the solute may not dissolve.

Protective members (25, 26) are each a cover to protect the portions of terminals (72, 71) of secondary battery 10 that are exposed from sealed case 8. Those members also work to prevent oxidation or the like from terminals (72, 71). Also, protective members (25, 26) prevent the SOC from an unwanted decrease caused by self-discharge of secondary battery 10.

Protective members (25, 26) are formed with insulative material, entirely covering terminal extended portions (9a, 9b) of secondary battery 10.

Protective members (25, 26) may be made of insulative film.

Next, positional relationships among members of package 100 are described.

As is clear in FIG. 3, regarding package 100, secondary batteries 10 (10a, 10b), divider member 102, and cushioning materials 103 (103a~103d) are stored in packaging container 101.

Accommodation space 105 in packaging container 101 is divided into multiple sections by divider member 102. As shown in FIG. 3, accommodation space 105 of the present embodiment is divided by divider member 102 into two sections (106, 107) in a top-to-bottom direction.

In lower divided section 106, cushioning material (103a) is spread at the bottom of packaging container 101, and secondary battery (10a) is placed on cushioning material (103a). Moreover, secondary battery 10 is covered by cushioning material (103b). Namely, secondary battery (10a) is sandwiched by cushioning materials (103a, 103b) inside packaging container 101, and almost all portions of the secondary battery are covered by cushioning materials (103a, 103b).

In upper divided section 107, cushioning material (103c) is spread on divider member 102, and secondary battery (10b) (10) is placed on cushioning material (103c). Moreover, secondary battery (10b) is covered by cushioning material (103d). Namely, secondary battery (10b) is sandwiched by cushioning materials (103c, 103d) inside packaging container 101, and almost all portions of the secondary battery are covered by cushioning materials (103c, 103d).

Terminals (72, 71) of secondary battery 10 inside accommodation space 105 are covered with protective members (25, 26) and insulated from the outside. Namely, no electrical connection is made between terminals (72, 71), and secondary battery 10 is in an open circuit.

Lastly, descriptions are provided for physical properties of nonaqueous electrolyte secondary battery 10 of the present embodiment.

As described above, nonaqueous electrolyte secondary battery 10 contains a layered rock-salt material, that is, a layered rock-salt active compound, as the primary component of positive-electrode active material, while containing a titanium compound as the primary component of negative-electrode active material.

When a secondary battery is set to have an SOC of a predetermined level or higher, packaged in packaging container 101 and stored at a warehouse or the like, a layered rock-salt active material is capable of occluding a gas generated as the electrolyte is decomposed at the negative-electrode abnormal active site of the titanium compound, thereby suppressing deterioration of battery performance.

On the other hand, if the SOC is too high, side reactions of the electrolyte occur at abnormal active sites formed at the charged layered rock-salt active material, thus forming an oxidation gas with a different polarity from the gas generated at abnormal active sites of the titanium compound.

Considering the above, for secondary battery 10 of the present invention to have a desired capability of occluding generated hydrogen gas while suppressing formation of an oxidation gas so that stable battery conditions are maintained during storage, an optimal SOC range is set for secondary battery 10 accommodated in packaging container 101, and secondary battery 10 is charged within the SOC range. Namely, in package 100 of the present embodiment, the secondary battery in packaging container 101 is set to have a predetermined range of SOC for the shipment phase.

More specifically, the SOC of secondary battery 10 in packaging container 101 is set to be 30% to 60%, preferably 45% to 55%, of the full charge capacity.

When the SOC is less than 30%, the gas generated at abnormal active sites of titanium compound as negative-electrode active material may not be sufficiently occluded during the storage period of secondary battery 10.

When the SOC exceeds 60%, formation of an oxidation gas at abnormal active sites of positive electrode 2 is not suppressed, and rate characteristics may be lowered from pre-storage to post-storage.

The SOC of secondary battery 10 in packaging container 101 is set to be roughly the same as that shortly after packaging container 101 is unpacked.

The SOC of secondary battery 10 in packaging container 101 may be directly measured by making a hole in one part of packaging container 101.

When secondary battery 10 with the SOC in a shipment setting is left standing for 30 days at 25°C under an atmospheric pressure of 1, a decrease in the SOC is preferred to be 2% or lower. Namely, the rate of decrease in the SOC is preferred to be 2% or lower from shortly after secondary battery 10 is accommodated in packaging container 101 until after it is left standing under standard conditions for 30 days.

If the range is in the above, the SOC is stable because self-discharge during storage is less. Accordingly, the aforementioned gas reduction effects last a long time.

According to package 100 of the present embodiment, secondary battery 10 in packaging container 101 contains a layered rock-salt active material in positive-electrode active-material layer 17, and the SOC of secondary battery 10 in packaging container 101 is set to be 30% to 60% of the full charge capacity. Therefore, even after long-term storage in a warehouse or the like, formation of gas is suppressed in secondary battery 10, and a decrease in rate characteristics from pre-storage to post-storage is suppressed.

According to package 100 of the present embodiment, secondary battery 10 in packaging container 101 contains a layered rock-salt active material and spinel-type lithium manganese oxide in positive-electrode active-material layer 17, and contains a titanium compound in negative-electrode active-material layer 16. Therefore, secondary battery 10 is used as a battery having high safety standards and a long lifetime after secondary battery 10 is unpacked from packaging container 101.

Next, package 200 is described according to a second embodiment. The same reference number is applied for the same structure as that of the first embodiment, and its description will be omitted.

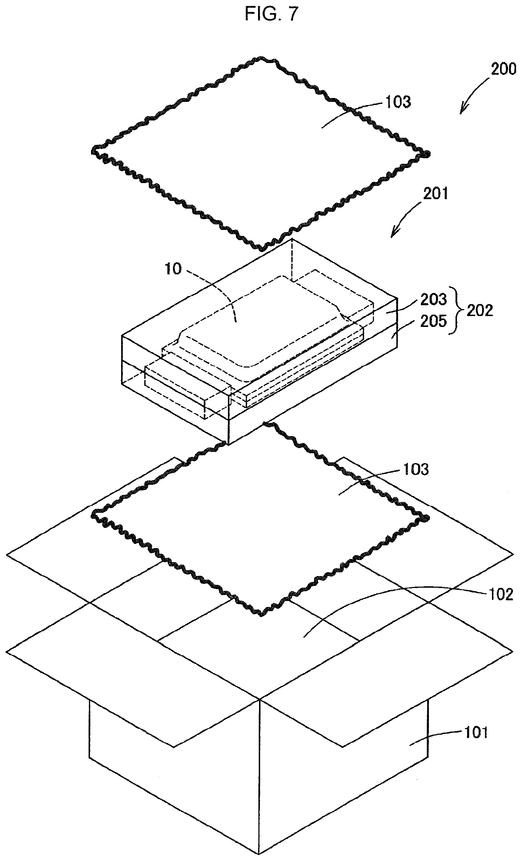

As shown in FIG. 7, package 200 of the second embodiment has packaging container 101, divider member 102, cushioning material 103 and storage unit 201.

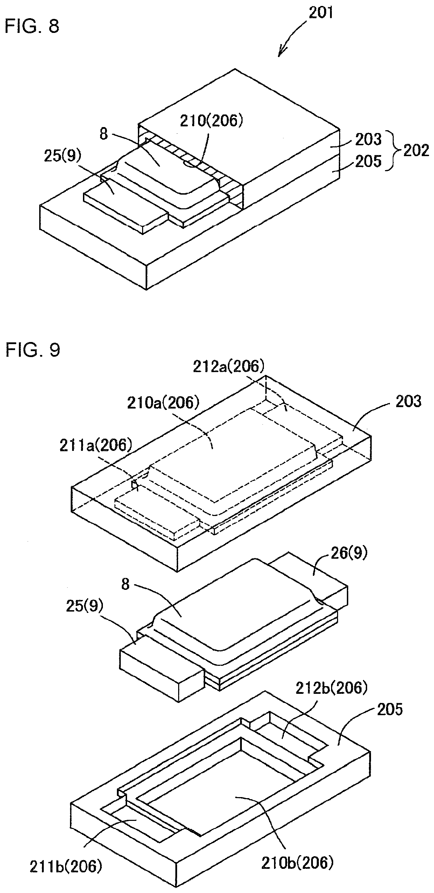

Storage unit 201 contains nonaqueous electrolyte secondary battery 10 in storage case 202 as shown in FIG. 8.

Storage case 202 is a rectangular or square case and accommodates secondary battery 10. As shown in FIG. 9, storage case 202 includes first storage section 203 and second storage section 205, which can be divided. Storage sections (203, 205) are both made of insulative resin and have concave portions (206, 207).

As shown in FIG. 9, concave portions (206, 207) are both formed to be indented corresponding to the outline of secondary battery 10. Namely, concave portions (206, 207) have sealed case-side storage portions (210a, 210b) capable of accommodating sealed case 8 of secondary battery 10, and terminal-side storage portions (211a, 212a, 211b, 212b) capable of accommodating at least terminal extended portions 9 of secondary battery 10.

Sealed case-side storage portions (210a, 210b) are shaped to correspond to the outline of sealed case 8 of secondary battery 10.

Terminal-side storage portions (211a, 212a, 211b, 212b) are shaped to correspond to the outline of protective members (25, 26).

Positional relationships of members of storage unit 201 are described below.

As found in FIGs. 8 and 9, concave portions (206, 207) are positioned to face each other to form one storage space 208. Secondary battery 10 is accommodated in storage space 208. Sealed case 8 of secondary battery 10 is fixed into sealed case-side storage portions (210a, 210b) while protective members (25, 26) are fixed into terminal-side storage portions (211a, 212a, 211b, 212b). Namely, secondary battery 10 is surrounded by concave portions (206, 207), and is virtually immovable in storage space 208.

According to package 200 of the present embodiment, since secondary battery 10 is fixed into concave portions (206, 207) of storage case 202, the secondary battery can move hardly at all inside storage case 202 while being packaged or transported. Also, since secondary battery 10 is accommodated in resin-made storage case 202, which works as cushioning material, secondary battery 10 is protected from shocks during transportation and the like.

According to package 200 of the present embodiment, since storage case 202 for accommodating secondary battery 10 is rectangular or square, it is easier to arrange and accommodate the case in packaging container 101.

In the above embodiments, secondary battery 10 is accommodated one battery per container in a space of packaging container 101. However, that is not the only option in the present invention. Battery packs of multiple secondary batteries electrically connected in parallel or series may also be accommodated pack by pack in the space.

In the above embodiments, terminals 7 are extended from the inside to the outside of sealed case 8, and terminal extended portions (9, 9) are exposed from two opposing sides of sealed case 8. However, that is not the only option in the present invention. Multiple terminal extended portions (9, 9) may both be exposed from either side of sealed case 8.

The above embodiments have described two secondary batteries (10a, 10b) accommodated in one packaging container 101. However, that is not the only option in the present invention.

One secondary battery 10 or three or more secondary batteries 10 may be accommodated in one packaging container 101.

In the above second embodiment, one storage unit 201 is arranged in one layer divided by divider member 102. However, that is not the only option in the present invention.

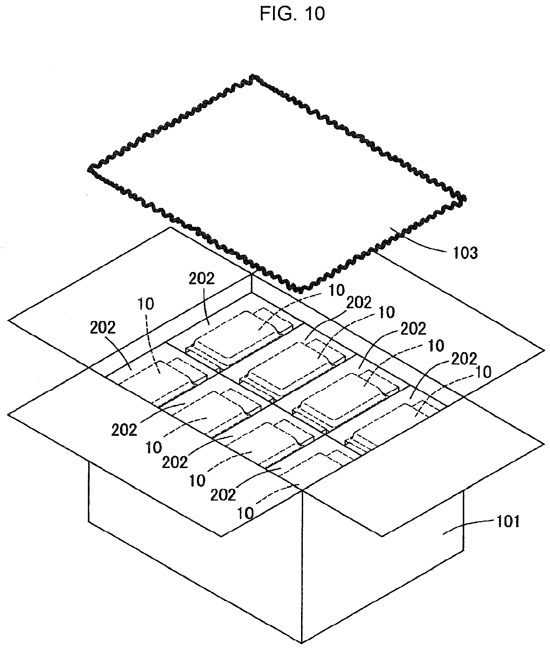

For example, as shown in FIG. 10, multiple storage units 201 may be arranged in each layer. In such a condition, it is preferred to pack storage units 201 in a planar condition without leaving any gap so as to completely fill the space.

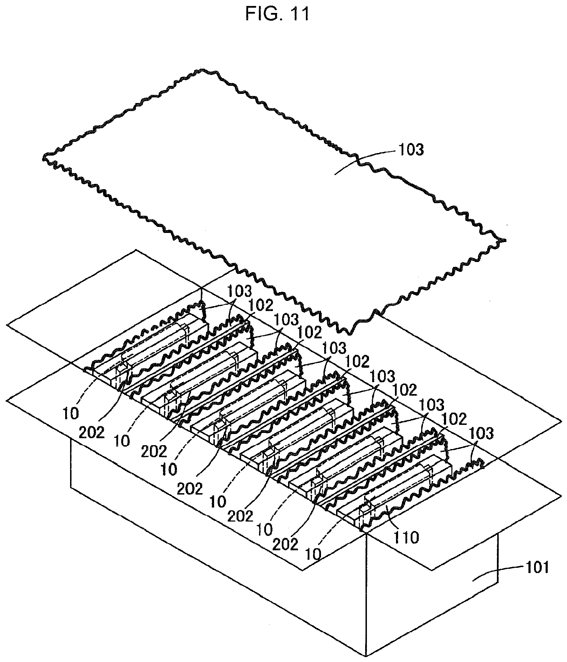

Also, in the above embodiments, secondary batteries 10 are stacked in a top-to-bottom direction, divided by divider member 102. However, that is not the only option in the present invention. For example, as shown in FIG. 11, secondary batteries 10 or storage units 201 may be each accommodated in an upright position and are divided by divider members 102.

As package 200 of the second embodiment, when secondary battery 10 is accommodated in a box-type storage case 202, secondary batteries 10 are divided from each other by storage case 202. Thus, it is an option not to use divider member 102.

In the above embodiments, secondary battery 10 is protected from damage or the like by sheet-type cushioning material 103. However, that is not the only option in the present invention. To protect secondary battery 10 from damage or the like, bale-type cushioning material may be placed in packaging container 101 in addition to sheet-type cushioning material 103, or a bale-type cushioning material may be used alone.

In the above embodiments, cushioning material 103 is arranged in packaging container 101. However, the present invention is not limited to such. It is an option not to use cushioning material 103.

In such a condition, it is preferred to accommodate secondary battery 10 in a box-type storage case 202 as shown in package 200 of the second embodiment. By so setting, storage case 202 works as a cushioning material, thus preventing secondary battery 10 from being damaged.

In the embodiments above, terminal extended portions (9, 9) are covered by protective members (25, 26).

However, the present invention is not limited to such. It is an option not to use protective members (25, 26).

In such a condition, it is preferred to accommodate secondary battery 10 in storage case 202 as shown in package 200 of the second embodiment. By so setting, terminal extended portions 9 are fixed into concave portions (206, 207) of storage case 202, which protect terminal extended portions 9 from the outside by storage case 202 even when no protective members (25, 26) are present.

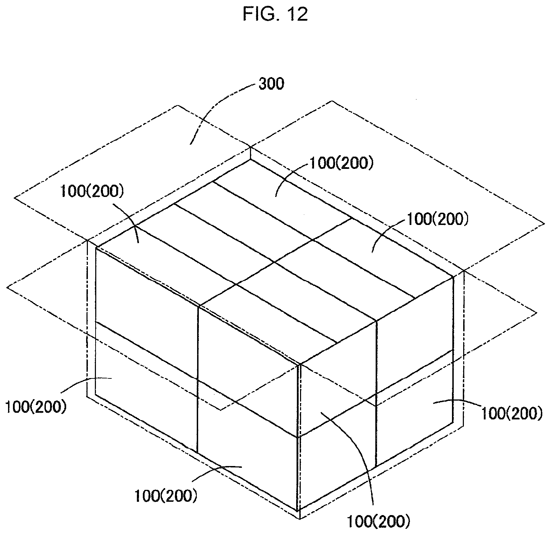

In the above embodiments, package 100 (200) may be accommodated with another package 100 (200) in packaging container 300 with a greater size as shown in FIG. 12.

EXAMPLES

In the following, the present invention is described in further detail by referring to examples. Note that the present invention is not limited to those examples, and any modifications are possible within a scope that does not deviate from the gist of the present invention.

As for battery 10 accommodated in packaging container 101 in each of Examples 1~14 and Comparative Examples 1~5, evaluations were conducted as follows.

(Method for Rate Test)

The charge/discharge rate was tested under the following conditions; starting with charging, charge and discharge were repeated under charge condition 1, discharge condition 1, charge condition 1 and discharge condition 2 in that order.

During the test, rate characteristics were determined by calculating the quotient of the discharge capacity of discharge condition 2 and the discharge capacity of discharge condition 1. Namely, when discharge capacity under discharge condition 2 is divided by discharge capacity under discharge condition 1, the result shows rate characteristics. Note that voltages described below are based not on lithium, but on voltages of nonaqueous electrolyte secondary battery.

Test Conditions

Battery ambient temperature: 25°C

Charge/discharge Conditions

Charge condition 1: charge at a constant current of 0.2 C until voltage reaches 2.7 V, then charge at a constant voltage while maintaining 2.7 V, and terminate charging when current becomes 0.02 C.

Discharge condition 1: discharge at a constant current of 0.2 C until voltage is lowered to 2.0 V, and terminate discharging when voltage becomes 2.0 V.

Discharge condition 2: discharge at a constant current of 2.0 C until voltage is lowered to 2.0 V, and terminate discharging when voltage becomes 2.0 V.

The "C" in charge condition 1, discharge condition 1 and discharge condition 2 indicates a so-called C-rate; 1C is defined as the current value necessary for charging or discharging in an hour the entire capacity of a nonaqueous electrolyte secondary battery. For example, 0.02 C means 0.02 times the above-defined current value. Namely, 0.02 C means the amount of current that completes charge or discharge in 50 hours.

(Method for Storage Test)

A nonaqueous electrolyte secondary battery is charged to a predetermined SOC and stored for 720 hours in a 60°C constant-temperature vessel. Next, after the nonaqueous electrolyte secondary battery is taken out and left standing at room temperature for 36 hours, the amount of gas and rate characteristics of the nonaqueous electrolyte secondary battery were measured.

(Retention Ratio of Rate Characteristics)

The retention ratio of rate characteristics is a percentage obtained when the rate characteristics after the above storage testing is compared with the rate characteristics prior to storage testing. Namely, the retention ratio of rate characteristics is the index showing how well the battery retains the rate characteristics after storage testing.

(Method for Measuring Amount of Gas Formation)

A gas pocket is arranged inside an aluminum sheet, which is the external cover of the sealed case of a battery, as part of the volume of a sealed case so that the gas generated during storage testing is stored in the gas pocket. Then, the volume of a secondary battery before and after storage testing was measured by Archimedes' method so that the amount of gas is determined from an increase of volume.

(Method for Charge/Discharge Cycle Test)

Charge/discharge cycle testing was conducted under the following conditions: starting with charging, discharging and charging were repeated under charge condition 2 and discharge condition 3, and were completed with discharging. Note that voltages described below are based not on lithium, but on voltages of a nonaqueous electrolyte secondary battery.

Cycle Conditions

Battery ambient temperature: 60°C
Cycle unit: charging once and discharging once
Number of repeated cycles: 400

Charge/discharge conditions

Charge condition 2: charge at a constant current of 0.5 C until voltage reaches 2.7 V, then charge at a constant voltage while maintaining 2.7 V, and terminate charging when current becomes 0.02 C.
Discharge condition 3: discharge at a constant current of 1.0 C until voltage is lowered to 2.0 V, and terminate discharging when voltage becomes 2.0 V.

(Capacity Retention Ratio)

The capacity retention ratio is a percentage obtained when the discharge capacity at the completion of charge/discharge cycle testing under the above cycle conditions is compared with the discharge capacity at the first cycle. Namely, the capacity retention ratio is the deflection of discharge capacity before and after charge/discharge cycle testing.

(Evaluation Criteria of Battery)

Batteries were evaluated by the criteria below.

(1) The retention ratio of rate characteristics after storage testing is 95% or higher and the amount of gas formation per unit volume is 0.3 mL/Ah or less.
(2) When charge/discharge cycle testing was conducted using a nonaqueous electrolyte secondary battery with the same structure as that subjected to storage testing, the capacity retention ratio was 90% or higher.

Batteries that satisfy both (1) and (2) are evaluated as "◎", those that satisfy only (1) are evaluated as "o", and others are evaluated as "×".

(Producing Spinel-type Lithium Manganese Oxide)

A powder of $Li_{1.1}Al_{0.1}Mn_{1.8}O_4$ was produced by the method described in a literature (Electrochemical and Solid-State Letters, 9 (12), A557 (2006)).

(Producing Lithium Cobalt Oxide)

Cobalt hydroxide and lithium hydroxide monohydrate were weighed to have an atomic ratio of cobalt atoms and lithium atoms at 1:1.03. The dry powders of cobalt hydroxide and lithium hydroxide monohydrate are well blended. The mixture is sintered at a temperature of 850°C in an air atmosphere for a predetermined time and is pulverized.

Accordingly, lithium cobalt oxide as a layered rock-salt compound was obtained.

(Forming Positive Electrode)

A positive-electrode active material was prepared by mixing the above-obtained spinel-type lithium manganese oxide (LMO) and lithium cobalt oxide (LCO) at a mixing ratio specified in Table 1. A slurry was then prepared by mixing 100 parts by weight of the positive-electrode active material, 5 parts by weight of conductive auxiliary (acetylene black) and 5 parts by weight of binder (solid content of 8 wt.%, NMP solution).

Next, the slurry was coated on aluminum foil (15 $\mu$m) to prepare an electrode sheet, which was vacuum dried at 170°C. The sheet was punched out to have a 4 cm×6 cm size. Accordingly, positive electrodes 1~9 shown in Table 1 below were each obtained as part of the positive-electrode member where the active-material layer was formed on a current collector.

In the above coating process, a single-sided electrode was prepared by coating the slurry on either surface of the aluminum foil, and a double-sided electrode was also prepared by coating the slurry on both surfaces of the aluminum foil.

Table 1

| Positive electrode | Weight ratio (wt.%) | |
|:---:|:---:|:---:|
| | lithium manganese oxide | lithium cobalt oxide |
| 1 | 0 | 100 |
| 2 | 10 | 90 |
| 3 | 50 | 50 |
| 4 | 90 | 10 |
| 5 | 95 | 5 |
| 6 | 97 | 3 |
| 7 | 98 | 2 |
| 8 | 99 | 1 |
| 9 | 100 | 0 |

(Measuring Capacity of Positive Electrodes 1~9)

On each of the positive electrodes prepared as above, charge/discharge testing was conducted using the method below on a half cell where the positive electrode is set as the action electrode and a lithium electrode as its counter electrode. By so setting, the capacity of each electrode was determined. Note that voltages described below are the values based on the lithium electrode.

First, each positive electrode set to be a single-sided electrode was punched out at 16 mm$\phi$ to form an action electrode, and a lithium metal plate was punched out at 16 mm$\phi$ to form a counter electrode. Then, the action electrode (the coated surface of single-sided coating to face inward) / separator (cellulose non-woven fabric) / counter electrode (lithium metal plate) were laminated in that order in a test cell (HS cell, made by Hohsen Corp.), into which 0.15 mL of a nonaqueous electrolyte (prepared by using ethylene carbonate: dimethyl carbonate=3:7 (volume ratio) as solvent, and LiPF$_6$=1 mol/L as solute) was filled and a half cell was obtained.

The half cell was left standing at 25°C for one day and was connected to a charge/discharge tester (HJ1005SD8, made by Hokuto Denko Corp.). Constant current charging and constant current discharging were repeated five times at 25°C and 0.4 mA. The discharge amount at the fifth cycle was set as the capacity of the positive electrode.

During that time, the charge cut-off voltage of constant-current charge was set at 4.25 V, and the discharge cut-off voltage of constant-current discharge was set at 3.0 V. As a result, the capacitance per unit surface area was 1.6~1.7 mAh/cm$^2$ in each of positive electrodes 1~9.

(Forming Negative Electrode 1)

Using a powder of lithium titanium oxide Li$_4$Ti$_5$O$_{12}$ (hereinafter also referred to as LTO) as negative-electrode active material, negative electrode 1 was formed as follows.

Negative Electrode 1: $Li_4Ti_5O_{12}$

First, a powder of $Li_4Ti_5O_{12}$ was produced by the method described in a literature (Journal of Electrochemical Society, 142, 1431 (1995)).

Next, a slurry was prepared by mixing 100 parts by weight of the powder, 5 parts by weight of conductive additive (acetylene black) and 5 parts by weight of binder in terms of solid content (solid content of 5 wt.%, NMP solution).

Next, the slurry was coated on aluminum foil (15 μm) and vacuum dried at 170°C. The obtained electrode sheet was punched out to have a 4.3 cm×6.3 cm size. Accordingly, negative electrode 1 having $Li_4Ti_5O_{12}$ as negative-electrode active material was prepared as part of the negative-electrode member obtained by forming active-material layer on a current collector. Moreover, a single-sided electrode and a double-sided electrode were both formed.

(Forming Negative Electrode 2)

Using a powder of bronze-type titanium dioxide $TiO_2$ (B) as negative-electrode active material, negative electrode 2 was formed as follows.

Negative Electrode 2: $TiO_2$ (B)

First, a powder of $TiO_2$ (B) was prepared by the method described in a literature (Journal of Electrochemical Society, 159, A49-A54 (2012)).

Next, using 100 parts by weight of the powder, a slurry was prepared by employing the same method as that for forming negative electrode 1, which was coated and vacuum dried. Then, the obtained electrode sheet was punched out to have a 4.3 cm×6.3 cm size. Accordingly, negative electrode 2 having bronze-type titanium dioxide $TiO_2$ (B) as negative-electrode active material was prepared as part of the negative-electrode member where an active-material layer was formed on a current collector.

(Forming Negative Electrode 3)

Using a powder of titanic acid compound $H_2Ti_{12}O_{25}$ (hereinafter also referred to as HTO) as negative-electrode active material, negative electrode 3 was formed as follows.

Negative Electrode 3: $H_2Ti_{12}O_{25}$

First, a powder of $H_2Ti_{12}O_{25}$ was prepared by the method described in a literature (Journal of Electrochemical Society, 158, A546-A549 (2011)).

Next, using 100 parts by weight of the powder, a slurry was prepared by employing the same method as that for forming negative electrode 1, which was coated and vacuum dried. Then, the obtained electrode sheet was punched out to have a 4.3 cm×6.3 cm size. Accordingly, negative electrode 3 having a titanic acid compound $H_2Ti_{12}O_{25}$ as negative-electrode active material was prepared as part of the negative-electrode member where an active-material layer was formed on a current collector.

(Measuring Capacity of Negative Electrodes 1~3)

The capacity of each of the negative electrodes prepared as above was measured by employing the same method as for positive electrodes 1~9.

However, the cut-off voltage in constant-current charging was set at 2.0 V, and the cut-off voltage in constant-current discharging was set at 1.0 V. As a result, the capacity per unit area in negative electrodes 1~3 was 1.8 mAh/cm² each.

Using the double-sided electrode, batteries in Examples 1~14 and Comparative Examples 1~5 were prepared by the method below. Types of positive electrodes and negative electrodes are specified in Tables 2~5.

(Forming Battery)

With cellulose nonwoven fabric (25 μm, 30 cm²) disposed in between, 13 sheets of positive electrodes and 14 sheets of negative electrodes were alternately laminated, and all the positive electrodes were collectively bonded to a positive-electrode terminal and all the negative electrodes were collectively bonded to a negative-electrode terminal by vibration welding. Accordingly, an electrode group having terminals was obtained.

Next, the electrode group having terminals was placed in a bag-type aluminum laminate sheet with the terminals partially extending to the outside. Into the aluminum bag, 5.5 mL of a nonaqueous electrolyte (prepared by using ethylene carbonate: dimethyl carbonate=3:7 (volume ratio) as a nonaqueous solvent, and $LiPF_6$=1 mol/L as a solute of a supporting salt) was filled and the opening of the bag was closed while the interior pressure of the bag was reduced. After the bag was cured for 12 hours, a nonaqueous electrolyte secondary battery was obtained.

Nonaqueous electrolyte secondary batteries in Examples 1~14 and Comparative Examples 1-5 were charged to the SOC specified in Tables 2 and 3, and storage testing was conducted. The amount of gas and rate characteristics were determined before and after testing.

Based on the test results, the amount of gas formation and retention ratio of rate characteristics in storage testing were measured. Also, charge/discharge cycle testing was conducted on nonaqueous electrolyte secondary batteries in Examples 1~8 and Comparative Example 1 and capacity retention ratios were determined.

The results of storage testing and charge/discharge cycle testing are shown in Tables 2 and 3. In addition, Tables 4 and 5 collectively show combined results of Tables 1~3.

Moreover, terminals extended to the outside were protected with insulative material and nonaqueous electrolyte secondary batteries in Examples 1~14 and Comparative Examples 1~5 were left standing at 25°C for 30 days and a decrease in SOC was measured. The result in each battery was 2% or lower.

Table 2

|  | Type of positive electrode | Type of negative electrode | SOC (%) | Retention ratio of rate characteristics (%) | Amount of gas formation (m L/Ah) | Capacity retention ratio (%) |
|---|---|---|---|---|---|---|
| Example 1 | 1 | 1 | 50 | 95 | <0.1 | 80 |
| Example 2 | 2 | 1 | 50 | 95 | <0.1 | 81 |
| Example 3 | 3 | 1 | 50 | 95 | <0.1 | 83 |
| Example 4 | 4 | 1 | 50 | 96 | <0.1 | 85 |
| Example 5 | 5 | 1 | 50 | 98 | <0.1 | 91 |
| Example 6 | 6 | 1 | 50 | 99 | <0.1 | 93 |
| Example 7 | 7 | 1 | 50 | 98 | <0.1 | 92 |
| Example 8 | 8 | 1 | 50 | 97 | 0.2 | 88 |
| Comp. Example 1 | 9 | 1 | 50 | 80 | 3 | 81 |

Table 3

|  | Type of positive electrode | Type of negative electrode | SOC (%) | Retention ratio of rate characteristics (%) | Amount of gas formation (m L/Ah) | Capacity retention ratio (%) |
|---|---|---|---|---|---|---|
| Example 9 | 6 | 1 | 30 | 97 | 0.2 | - |
| Example 6 | 6 | 1 | 50 | 99 | <0.1 | - |
| Example 10 | 6 | 1 | 60 | 96 | 0.1 | - |

(continued)

| | Type of positive electrode | Type of negative electrode | SOC (%) | Retention ratio of rate characteristics (%) | Amount of gas formation (m L/Ah) | Capacity retention ratio (%) |
|---|---|---|---|---|---|---|
| Example 11 | 6 | 2 | 30 | 96 | <0.1 | - |
| Example 12 | 6 | 2 | 60 | 96 | <0.1 | - |
| Example 13 | 6 | 3 | 30 | 96 | <0.1 | - |
| Example 14 | 6 | 3 | 60 | 96 | <0.1 | - |
| Comp. Example 2 | 6 | 1 | 0 | 78 | 4.7 | - |
| Comp. Example 3 | 6 | 1 | 20 | 93 | 0.8 | - |
| Comp. Example 4 | 6 | 1 | 70 | 93 | 0.4 | - |
| Comp. Example 5 | 6 | 1 | 100 | 88 | 1.5 | - |

Table 4

| | Type of positive electrode weight ratio (wt.%) | | Type of negative electrode | SOC (%) | Retention ratio of rate characteristics (%) | Amount of gas formation (mL/Ah) | Capacity retention ratio (%) | Evaluation |
|---|---|---|---|---|---|---|---|---|
| | LMO | LCO | | | | | | |
| Example 1 | 0 | 100 | LTO | 50 | 95 | <0.1 | 80 | ○ |
| Example 2 | 10 | 90 | LTO | 50 | 95 | <0.1 | 81 | ○ |
| Example 3 | 50 | 50 | LTO | 50 | 95 | <0.1 | 83 | ○ |
| Example 4 | 90 | 10 | LTO | 50 | 96 | <0.1 | 85 | ○ |
| Example 5 | 95 | 5 | LTO | 50 | 98 | <0.1 | 91 | ◎ |
| Example 6 | 97 | 3 | LTO | 50 | 99 | <0.1 | 93 | ◎ |
| Example 7 | 98 | 2 | LTO | 50 | 98 | <0.1 | 92 | ◎ |

(continued)

| | Type of positive electrode | | Type of negative electrode | SOC (%) | Retention ratio of rate characteristics (%) | Amount of gas formation (mL/Ah) | Capacity retention ratio (%) | Evaluation |
|---|---|---|---|---|---|---|---|---|
| | weight ratio (wt.%) | | | | | | | |
| | LMO | LCO | | | | | | |
| Example 8 | 99 | 1 | LTO | 50 | 97 | 0.2 | 88 | ○ |
| Comp. Example 1 | 100 | 0 | LTO | 50 | 80 | 3 | 81 | × |

Table 5

| | Type of positive electrode | | Type of negative electrode | SOC (%) | Retention ratio of rate characteristics (%) | Amount of gas formation (m L/Ah) | Evaluation |
|---|---|---|---|---|---|---|---|
| | weight ratio (wt.%) | | | | | | |
| | LMO | LCO | | | | | |
| Example 9 | 97 | 3 | LTO | 30 | 97 | 0.2 | ◎ |
| Example 6 | 97 | 3 | LTO | 50 | 99 | <0.1 | ◎ |
| Example 10 | 97 | 3 | LTO | 60 | 96 | 0.1 | ◎ |
| Example 11 | 97 | 3 | $TiO_2(B)$ | 30 | 96 | <0.1 | ◎ |
| Example 12 | 97 | 3 | $TiO_2(B)$ | 60 | 96 | <0.1 | ◎ |
| Example 13 | 97 | 3 | HTO | 30 | 96 | <0.1 | ◎ |
| Example 14 | 97 | 3 | HTO | 60 | 96 | <0.1 | ◎ |
| Comp. Example 2 | 97 | 3 | LTO | 0 | 78 | 4.7 | × |
| Comp. Example 3 | 97 | 3 | LTO | 20 | 93 | 0.8 | × |
| Comp. Example 4 | 97 | 3 | LTO | 70 | 93 | 0.4 | × |
| Comp. Example 5 | 97 | 3 | LTO | 100 | 88 | 1.5 | × |

As shown in Tables 4 and 5, results in Examples 1~4 and 8 were evaluated as "O", Examples 5~7 and 9~14 as "◎", and Comparative Examples 1~5 as "×".

Namely, Examples 1~4 and 8 satisfied only (1) below, Examples 1~5 and 9~14 each satisfied (1) and (2), and Comparative Examples 1~5 satisfied neither (1) nor (2).

(1) The retention ratio of rate characteristics in storage testing is 95% or higher and the amount of gas formation per unit volume is 0.3 mL/Ah or less.

(2) The capacity retention ratio is 90% or higher.

The results in Examples 1~14 and Comparative Examples 1~5 are studied below. First, results shown in Tables 2 and 4 are studied.

As shown in Tables 2 and 4, secondary batteries in Examples 1~8 each exhibited excellent retention ratio of rate characteristics and less gas formation in storage testing. Although the reasons for such results are not clear, it is thought to be because gas generated at abnormal active sites of a titanium compound was occluded effectively by a layered rock-salt compound in the secondary battery set to have an appropriate SOC.

In addition, secondary batteries in Examples 5~7 exhibited high capacity retention ratios such as 90% or higher in charge/discharge cycle testing. It is thought to be because a spinel-type lithium manganese oxide with a stable structure and a layered rock-salt compound with a gas occlusion capability were contained in those positive electrodes at appropriate ratios.

Secondary batteries in Examples 1~4 each have the same SOC as the batteries in Examples 5~7, but have higher ratios of a layered rock-salt compound than the batteries in Examples 5~7.

As shown in Table 4, retention ratios of rate characteristics and gas formation in Examples 1~4 did not show significant changes in storage testing, but the capacity retention ratios were lower than the results in Examples 5~7.

That is thought to be because the ratios of layered rock-salt compounds in Examples 1~4 were higher, and impact from deterioration of layered rock-salt compounds was more significant when they were used repeatedly in charge/discharge cycle testing.

Secondary batteries in Example 8 and Comparative Example 1 have the same SOC as the batteries in Examples 5~7, but have lower ratios of a layered rock-salt compound than the batteries in Examples 5~7.

Compared with the results in Examples 5~7, the retention ratio of rate characteristics and gas formation in Example 8 did not show significant changes in storage testing, but the capacity retention ratio was lower. The retention ratio of rate characteristics and gas formation in storage testing as well as the capacity retention ratio showed worse results in Comparative Example 1 than those of Examples 5~7.

Reasons for the above results are thought to be that since the ratios of a layered rock-salt compound in Example 8 and Comparative Example 1 were lower than those in Examples 5~7, the gas generated at abnormal active sites of titanium compound was not occluded sufficiently during storage testing, thus causing an increase in the internal resistance.

When Example 8 and Comparative Example 1 were compared, it was found that the retention ratio of rate characteristics and gas formation in storage testing were improved by the presence of a layered rock-salt compound.

Considering the above results, it was found that to achieve stable rate characteristics and retain a high capacity retention ratio, it is best to add a layered rock-salt compound at 2 wt.% to 5 wt.% of the amount of active material in the positive electrode, as shown in secondary batteries in Examples 5~7.

Next, results in Tables 3 and 5 are studied.

With regard to secondary batteries in Examples 6, 9 and 10, their retention ratios of rate characteristics were high and gas formation was less in storage testing as shown in Tables 3 and 5.

That is thought to be because each of the batteries had an appropriate SOC, and the gas generated at abnormal active sites of the negative electrode was occluded by the layered rock-salt compound during storage testing, thus the retention ratio of rate characteristics showed a lower deflection, and there was less gas formation.

Secondary batteries in Comparative Examples 2 and 3 each have the same weight ratio in the positive-electrode active material but a lower SOC than the batteries in Examples 6, 9 and 10.

Comparative Example 2 showed a lower retention ratio of rate characteristics and more gas formation in storage testing. Comparative Example 3 did not show a significant difference in the retention ratio of rate characteristics, but generated more gas in storage testing. The reasons for those results are thought to be that the layered rock-salt compound failed to sufficiently occlude the gas generated during storage testing due to a lower SOC of nonaqueous electrolyte secondary batteries.

Meanwhile, secondary batteries in Comparative Examples 4 and 5 each have the same weight ratio in the positive-electrode active material but a higher SOC than the batteries in Examples 6, 9 and 10.

Comparative Example 4 did not show a significant change in the retention ratio of rate characteristics, but more gas formation was observed in storage testing. Comparative Example 5 showed a lower retention ratio of rate characteristics and more gas formation in storage testing. Reasons for those results are thought to be since the SOC of each nonaqueous electrolyte secondary battery is too high, gas generated at abnormal active sites of the titanium compound was occluded but an oxidation gas was generated at abnormal active sites of the positive electrode, causing an increase in the internal resistance while causing a decrease in the retention ratio of rate characteristics.

When Comparative Example 2 (SOC: 0%), Comparative Example 3 (SOC: 20%), Example 3 (SOC: 30%) and Example 6 (SOC: 50%) are compared, it is found that the retention ratio of rate characteristics increases and gas formation decreases as the SOC goes higher.

When Comparative Example 6 (SOC: 50%), Example 10 (SOC: 60%), Comparative Example 4 (SOC: 70%) and Comparative Example 5 (SOC: 100%) are compared, it is found that the retention ratio of rate characteristics decreases and gas formation increases as the SOC goes higher.

From the above results, it is found that the appropriate SOC of a nonaqueous electrolyte secondary battery is 30% to 60%.

Examples 11~14 were each evaluated as "◎"; the retention ratio of rate characteristics and gas formation per unit volume in storage testing, as well as the capacity retention ratio, all showed excellent results.

From the above results, it is found that, the same as with a battery containing $Li_4Ti_5O_{12}$, excellent retention ratios of rate characteristics and lower gas formation per unit volume are achieved in storage testing by setting the SOC at 30% to 60% even when $TiO_2$ (B) or $H_2Ti_{12}O_{25}$ is used as the titanium compound.

From the results above, it is found that by setting the SOC at 30%~60%, stable rate characteristics are obtained while formation of gas is suppressed.

Moreover, it is found that when a layered rock-salt compound is added to the positive-electrode active material at 2 wt.% to 5 wt.% of the amount of active material in the positive electrode, a higher capacity retention ratio is maintained in addition to the above improvements.

DESCRIPTION OF NUMERICAL REFERENCES

1 negative electrode
2 positive electrode
3 separator
7 terminal
8 sealed case
9 terminal extended portion
10 nonaqueous electrolyte secondary battery
71 negative-electrode terminal (terminal portion)
72 positive-electrode terminal (terminal portion)
100 package
101 packaging container
110 sealing member

**Claims**

1. A package that accommodates a pre-charged secondary battery in a packaging container,
   wherein the secondary battery comprises a sealed case that encapsulates a positive electrode, a nonaqueous electrolyte, a negative electrode and a separator;
   the positive electrode comprises a layered rock-salt compound as positive electrode active material;
   the negative electrode comprises a titanium compound as negative-electrode active material and faces the positive electrode with the separator disposed in between;
   the separator is electrically insulative and is impregnated with the nonaqueous electrolyte;
   the packaging container accommodates the secondary battery; and
   the secondary battery in the packaging container is charged at 30% to 60% of the full charge capacity.

2. The package according to Claim 1, wherein the positive electrode comprises a layered rock-salt compound as positive-electrode active material at 2 wt.% to 5 wt.%.

3. The package according to Claim 1 or 2, wherein the secondary battery is set to be in an open circuit.

4.  The package according to any of Claims 1~3, wherein the positive electrode further comprises a spinel-type lithium manganese oxide as positive-electrode active material.

5.  The package according to any of Claims 1~4, wherein the layered rock-salt compound is at least one type selected from a group consisting of lithium cobalt oxide, lithium nickel cobalt aluminum oxide and lithium nickel cobalt manganese oxide.

6.  The package according to any of Claims 1~5, wherein the titanium compound is one type selected from among $Li_4Ti_5O_{12}$, $TiO_2(B)$ and $H_2Ti_{12}O_{25}$.

7.  The package according to any of Claims 1~6, wherein after the secondary battery is accommodated in the packaging container and left there for 30 days at 25°C under an 1 atmospheric pressure, the charge rate is at least 98% of the charge rate measured shortly before accommodating the secondary battery in the packaging container.

8.  The package according to any of Claims 1~7, wherein the secondary battery has a terminal electrically connected to the positive or negative electrode, the terminal extends from the inside to the outside of the sealed case, and the portion of the terminal exposed from the sealed case is covered with an insulative protective member.

9.  A package that accommodates a pre-charged secondary battery in a packaging container,
    wherein the secondary battery comprises a positive electrode, a negative electrode and a nonaqueous electrolyte;
    the positive electrode comprises a spinel-type lithium manganese oxide and a layered rock-salt compound as positive-electrode active material, and the layered rock-salt compound is contained at 2 wt.% to 5 wt.%;
    the layered rock-salt compound is at least one type selected from a group consisting of lithium cobalt oxide, lithium nickel cobalt aluminum oxide and lithium nickel cobalt manganese oxide;
    the negative electrode contains at least one type of titanium compound selected from among $Li_4Ti_5O_{12}$, $TiO_2(B)$ and $H_2Ti_{12}O_{25}$;
    the packaging container accommodates the secondary battery; and
    the charge capacity of the secondary battery inside the packaging container is 30 to 60% of the full charge capacity.

FIG.1

FIG. 2

FIG. 3

FIG. 4

FIG. 5

FIG. 6

FIG. 7

FIG. 8

FIG. 9

FIG. 10

FIG. 11

FIG. 12

## INTERNATIONAL SEARCH REPORT

| International application No. |
|---|
| PCT/JP2016/062781 |

**A. CLASSIFICATION OF SUBJECT MATTER**
*H01M10/0525*(2010.01)i, *H01M4/36*(2006.01)i, *H01M4/48*(2010.01)i, *H01M4/485* (2010.01)i, *H01M4/505*(2010.01)i, *H01M4/525*(2010.01)i, *H01M10/0566* (2010.01)i

According to International Patent Classification (IPC) or to both national classification and IPC

**B. FIELDS SEARCHED**

Minimum documentation searched (classification system followed by classification symbols)
H01M10/0525, H01M2/10, H01M4/36, H01M4/48, H01M4/485, H01M4/505, H01M4/525, H01M10/0566

Documentation searched other than minimum documentation to the extent that such documents are included in the fields searched
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-319435 A (Sony Corp.), 31 October 2002 (31.10.2002), (Family: none) | 1-9 |
| A | JP 2002-25626 A (Toyota Central Research and Development Laboratories, Inc.), 25 January 2002 (25.01.2002), (Family: none) | 1-9 |
| A | JP 2012-89349 A (Nissan Motor Co., Ltd.), 10 May 2012 (10.05.2012), & KR 10-2012-0040673 A | 1-9 |
| A | JP 2001-143705 A (Sanyo Electric Co., Ltd.), 25 May 2001 (25.05.2001), & US 6482550 B1  & EP 1100133 A2 & KR 10-2001-0051629 A  & CN 1296305 A | 1-9 |

☒ Further documents are listed in the continuation of Box C.　　☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 19 July 2016 (19.07.16) | 02 August 2016 (02.08.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
|---|
| PCT/JP2016/062781 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2014/080039 A1  (LECLANCHE SA), 30 May 2014 (30.05.2014), & JP 2015-535646 A      & US 2015/0303482 A1 & GB 2508218 A      & KR 10-2015-0090075 A & CN 104904041 A | 1-9 |
| A | JP 2011-246131 A  (Hitachi Maxell Energy, Ltd.), 08 December 2011 (08.12.2011), (Family: none) | 8 |
| A | JP 2003-59472 A  (Kabushiki Kaisha AT Battery), 28 February 2003 (28.02.2003), (Family: none) | 8 |

Form PCT/ISA/210 (continuation of second sheet) (January 2015)

**REFERENCES CITED IN THE DESCRIPTION**

**Patent documents cited in the description**

- JP 2000260471 A

- JP 2000215884 A

**Non-patent literature cited in the description**

- *Electrochemical and Solid-State Letters,* 2006, vol. 9 (12), A557
- *Journal of Electrochemical Society,* 1995, vol. 142, 1431

- *Journal of Electrochemical Society,* 2012, vol. 159, A49-A54
- *Journal of Electrochemical Society,* 2011, vol. 158, A546-A549